# EUROPÄISCHE PATENTSCHRIFT

(11) **EP 4 091 786 B1**
(45) Veröffentlichungstag und Bekanntmachung des Hinweises auf die Patenterteilung: **16.10.2024**
(21) Anmeldenummer: 22172689.6
(22) Anmeldetag: 11.05.2022
(51) Int. Cl.: B29C 45/00, F16L 15/08, F16L 19/00

(54) **SCHRAUBVERBINDUNG**
SCREW CONNECTION
LIAISON VISSÉE

(30) Priorität: 18.05.2021 DE 102021112801
(43) Veröffentlichungstag der Anmeldung: 23.11.2022
(73) Patentinhaber: Voss Automotive GmbH, 51688 Wipperfürth (DE)
(72) Erfinder: HAGEN, Harald, 51688 Wipperfürth (DE); HATOUM, Ihab, 51515 Kürten (DE)
(74) Vertreter: Dr. Solf & Zapf Patent- und Rechtsanwalts PartG mbB

(56) Entgegenhaltungen:
- EP-A1- 3 543 167
- EP-A2- 0 297 493
- WO-A1-2020/211962
- DE-A1- 102018 107 507

## Beschreibung

Die Erfindung betrifft eine Schraubverbindung aufweisend ein Schraubteil mit einem ringförmigen Querschnitt. Insbesondere ist das Schraubteil eine Hohlschraube oder eine Mutter, die einen hohlzylindrischen und aus einer plastifizierten polymeren Masse spritzgegossenen Grundkörper aufweist. Der Grundkörper weist mindestens einen Innenkanal zur Anordnung und/oder Durchführung eines Leitungssystemelements und ein Innengewinde und/oder ein Außengewinde zur Verschraubung mit einem Gegenverbinder auf. Das Schraubteil ist bei einer Drehung in einem Montagedrehsinn in eine Montagerichtung mit dem Gegenverbinder verschraubbar. Weiterhin betrifft die Erfindung ein Schraubteil und einen Zwischenring für eine solche Schraubverbindung sowie ein Verschraubungsset bestehend aus einem solchen Schraubteil und einem solchen Zwischenring für eine solche Schraubverbindung.

Derartige Schraubteile werden regelmäßig mit einem zumindest teilweise aus einer Fasern enthaltenden, plastifizierten polymeren Masse spritzgegossenen Grundkörper ausgebildet.

Aus der WO 2013/092234 A1 sind ein gattungsgemäßes Schraubteil aus einer plastifizierten polymeren Masse sowie ein Verfahren zu dessen Herstellung bekannt. Hierbei ist der Innenkanal in verschiedene axial aneinandergereihte Funktionsabschnitte unterteilt zur Anlage einer Umfangsdichtung, zur direkten oder indirekten Halterung und/oder Arretierung eines als Steckerteil ausgebildeten Leitungssystemelements und/oder zur Stützung und/oder Führung des Steckerteils. Um ein ungewolltes Lösen der Schraubverbindung und dadurch die Dichtigkeit zu gewährleisten, ist aus der WO 2013/ 092234 A1 bekannt, mittels eines bestimmten Herstellungsverfahrens das Schraubteil mit einer erhöhten Festigkeit herzustellen, so dass das Schraubteil mit einem hohen Drehmoment im Gegenverbinder verschraubt werden kann. Es wird vorgeschlagen, dass bei der Herstellung der Anguss zum Innenkanal weisend und in einem Abschnitt des Innenkanals erfolgt, der nicht der Anlage einer Umfangsdichtung oder der Halterung und/oder Arretierung des in das Schraubteil einführbaren Steckerteils dient. Insbesondere kommt es durch ein lokal unterschiedliches Schwindungsverhalten beim Erstarren der polymeren Masse zu Verformungen, welche insbesondere die Montage erschweren, und/oder zu einem ungleichmäßigen Spannungsverlauf bei Belastungen. Das Dokument WO 2020/211962 A1 offenbart, dass der Endanschlag als Einklemmschutz oder Lösbarkeitsindikator dient.

Aus der WO 2015/158805 A1 ist ein Schraubteil bekannt, welches im Vergleich zu dem aus der WO 2013/092234 A1 bekannten Schraubteil ein geringeres Ausmaß der Verformung und ein besseres Spannungsverhalten bei einer Belastung aufweist, so dass das Anschraubdrehmoment erhöht bzw. der Ausschuss bei der Herstellung gesenkt werden kann.

Sowohl bei dem Schraubteil gemäß der WO 2015/158805 A1 als auch bei dem Schraubteil gemäß der WO 2013/092234 A1 kommt es zu einem hohen Materialverlust, da beide Methoden eine hohe Anzahl an Angüssen vorsehen.

Bei den aus dem Stand der Technik bekannten Schraubteilen ist ein hohes Drehmoment für die Selbsthaltung und Abdichtung notwendig. Bei der Montage kann es dazu kommen, dass das Schraubteil dem aufgebrachten Drehmoment nicht standhalten kann, insbesondere in Kombination mit einer Schwächungsstelle im Schraubteil, z. B. einer Dichtungsnut oder einem Materialfehler. Das kann zu unzulässig großen Verformungen oder zu einem Abriss des Schraubteils führen. Da die Größe des Schraubteils korrespondierend zu einem Gewinde des Gegenverbinders ausgebildet ist, ist auch eine Querschnittsvergrößerung zur Erhöhung des Widerstands meist nicht möglich.

Weiterhin kann es nach dem Anziehen der Verbindung mit genügendem Anzugsdrehmoment durch Relaxation des Kunststoffmaterials zu einem ungewollten Lösen der Verbindung kommen.

Der Erfindung liegt die Aufgabe zugrunde, eine Schraubverbindung zur Verfügung zu stellen, die die aus dem Stand der Technik bekannten Probleme überwindet, indem nur ein niedriges Anzugsdrehmoment erforderlich ist und trotzdem ein ungewolltes Lösen unterbunden wird.

Die Aufgabe wird erfindungsgemäß durch die Merkmale des Anspruchs 1 dadurch gelöst, dass zumindest ein Rastelement monolithisch einstückig am Schraubteil angeformt ist und eine Rastkontur in und gegen den Montagedrehsinn sowie in Montagerichtung in einer Endlage des Schraubteils am Gegenverbinder fixiert ausgebildet ist. Das Rastelement und die Rastkontur sind derartig ausgebildet, dass zumindest in der Endlage eine Drehung des Schraubteils gegen den Montagedrehsinn durch ein formschlüssiges Eingreifen des Rastelements in die Rastkontur blockiert ist.

Die Endlage beschreibt im Sinne der Erfindung einen Verschraubungszustand, bei dem das Schraubteil derart weit in Montagerichtung mit dem Gegenverbinder verschraubt ist, dass die Dichtigkeit ausreichend gewährleistet ist, insbesondere ein Funktionselement, zum Beispiel eine Dichtfläche oder eine Dichtung des Schraubteils die Dichtfunktion erfüllend axial passend zum Leitungssystemelement oder Gegenverbinder positioniert ist.

Insbesondere die Erkenntnis, dass zum Abdichten ein um ein Vielfaches geringeres Anzugsdrehmoment notwendig ist als zum Verhindern des ungewollten Lösens, begründet die erfindungsgemäße Ausführung. Der Vorteil der Erfindung liegt darin, dass die Aufgaben des Abdichtens und des Verhinderns eines ungewollten Lösens voneinander getrennt erfüllt werden. Das Rastelement und die Rastkontur ermöglichen dabei, dass das Schraubteil lediglich mit dem zum Abdichten notwendigen Anzugsdrehmoment mit dem Gegenverbinder verschraubt werden muss, da die Blockierung zumindest in Endlage unabhängig vom aufgebrachten Anzugsdrehmoment eine Drehung entgegen dem Montagedrehsinn und dadurch ein Lösen der Verschraubung verhindert.

Die Erfindung ermöglicht es vorteilhaft, dass auch Schraubteile mit einem geringeren Querschnitt hergestellt und eingesetzt werden können. Weiterhin kann größtenteils auf aufwändige Herstellungsverfahren oder komplexe Versteifungen, z. B. umspritzte Einlegteile im Schraubteil, verzichtet werden.

Zweckmäßig ist zumindest das Rastelement oder die Rastkontur radial- oder axialelastisch ausgebildet. Insbesondere sind dabei das Rastelement und die Rastkontur derart korrespondierend zueinander ausgebildet, dass bei der Montage zumindest über einen Teilabschnitt bis zum Erreichen der Endlage die radial- oder axialelastische Rastkontur oder das radial- oder axialelastische Rastelement von dem entsprechend korrespondierend ausgebildeten Rastelement oder Rastkontur bei einer Drehung des Schraubteils im Montagedrehsinn elastisch verformt wird und bei einer Drehung des Schraubteils gegen den Montagedrehsinn das Rastelement und die Rastkontur formschlüssig ineinandergreifen.

Zweckmäßig ist das Rastelement gegen die Montagerichtung gesehen hinter dem Innengewinde und/oder Außengewinde des Schraubteils angeordnet. Besonders vorteilhaft ist das Rastelement in einer ergänzenden oder alternativen Ausführung zwischen dem Innengewinde und/oder Außengewinde des Schraubteils und einem Kraftangriff angeordnet. Der Kraftangriff ist insbesondere ein Eingriffselement, wie ein Sechskantschraubenkopf, für ein entsprechendes Werkzeug.

In einer vorteilhaften Ausführungsform der Erfindung ist die Rastkontur an einem einen Durchgangskanal umfassenden hohlzylinderartigen Zwischenring ausgebildet. Vorteilhaft ist das Schraubteil mit dem Innengewinde und/oder dem Außengewinde durch den Durchgangskanal des Zwischenrings hindurchführbar, und der Zwischenring ist zweckmäßig in und gegen den Montagedrehsinn zumindest in der Endlage an dem Gegenverbinder fixiert. Vorteilhaft ist das Schraubteil bis zum Erreichen der Endlage des Schraubteils relativ zum Zwischenring zumindest in Richtung des Montagedrehsinns drehbar gelagert. Praktischerweise kann bei dieser Ausführung der Gegenverbinder ohne die Rastkontur ausgebildet werden. Dadurch ist das Schraubteil universeller anwendbar, wobei nur geringfügige Modifizierungen am Gegenverbinder notwendig sind. Insbesondere wenn der Gegenverbinder aus einem metallischen Werkstoff ausgebildet ist, ist die Ausbildung einer Rastkontur am Gegenverbinder aufwändig, da der Gegenverbinder regelmäßig aus Aluminium-Druckguss oder durch Kaltfließpressen hergestellt wird und eine feine Verzahnung schwierig zu entformen ist.

Zur Lagerung und Fixierung des Zwischenrings an dem Gegenverbinder weist der Zwischenring zweckmäßig zumindest einen sich in Montagerichtung erstreckenden Haltearm auf. Insbesondere ist der Haltearm derart ausgebildet, dass er in eine Haltekontur des Gegenverbinders einführbar ist und in eingeführter Lage eine Verdrehung des Zwischenrings in und gegen den Montagedrehsinn relativ zum Gegenverbinder formschlüssig blockiert. Besonders vorteilhaft kann die Haltekontur als eine, sich in axialer Richtung erstreckende, Haltenut ausgebildet sein. Bevorzugt ist der Haltearm spätestens in der Endlage des Schraubteils in einer in der Haltekontur eingeführten Lage. Gemäß einer vorteilhaften Ausführung sind der Haltearm und die Haltekontur derartig ausgebildet, dass der Haltearm bereits in einer gegen die Montagerichtung von der Endlage beabstandeten Einführlage in die Haltekontur eingreift.

Gemäß einer weiteren bevorzugten Ausführung der Erfindung hat das Schraubteil in Montagerichtung betrachtet vor dem Innengewinde und/oder dem Außengewinde einen radial hervorstehenden Auflageflansch ausgebildet. Der Auflageflansch weist vorzugsweise einen maximalen Außendurchmesser auf, welcher größer ist als ein minimaler Durchmesser des Durchgangskanals des Zwischenrings. Dadurch, dass der Zwischenring in der Endlage in die Montagerichtung weisend am Gegenverbinder fixiert ist, kann der Zwischenring bei der Montage zwischen dem Auflageflansch des Schraubteils und dem Gegenverbinder verspannt werden. Insbesondere wird dadurch die Lage des Zwischenrings in und gegen die Montagerichtung bestimmt, so dass die Montage zuverlässig mit gleichbleibender Qualität erfolgen kann und ein Kontakt des Rastelements mit der Rastkontur zumindest in der Endlage gewährleistet ist.

Zweckmäßig kann es für die Herstellung des Schraubteils vorteilhaft sein, wenn das Rastelement am Auflageflansch des Schraubteils angeformt ist. Insbesondere wenn das Schraubteil als Spritzgussteil aus einer plastifizierten polymeren Masse hergestellt wird, ist es vorteilhaft, dass das Rastelement gemäß dieser Ausführung ohne einen Hinterschnitt in Montagerichtung betrachtet gefertigt werden kann.

Um die Montage und die Lagerung zu erleichtern, hat der Zwischenring in einer besonderen Ausführung Klemmarme angeformt, welche mit einem freien Ende gegen die Montagerichtung weisen. Vorzugsweise sind die Klemmarme derart ausgebildet, dass beim Einführen des Schraubteils in den Durchgangskanal die Klemmarme von dem Auflageflansch radialelastisch nach außen geformt werden und sich in Montagerichtung gesehen vor dem Auflageflansch elastisch rückformen. Dadurch ist insbesondere ein axiales Trennen des Zwischenrings vom Schraubteil formschlüssig blockiert. Gemäß dieser Ausführung kann das Schraubteil zusammen mit dem Zwischenring als verbundene Einheit, insbesondere als Schraubverbindungsset, mit dem Gegenverbinder verschraubt werden.

Bevorzugt sind die Klemmarme radialelastisch ausgebildet und weisen vorteilhaft an ihren freien Enden eine sich radial in Richtung des Durchgangskanals erstreckende Ausformung auf. Zweckmäßig sind die Ausformungen in einem unverformten Zustand der Klemmarme auf einer Kreisbahn mit einem geringeren Durchmesser als der maximale Außendurchmesser des Auflageflansches angeordnet.

Vorzugsweise ist das Rastelement als radial- oder axialelastischer Rastarm mit zumindest einer gegen den Montagedrehsinn weisenden Rastfläche ausgebildet. Zweckmäßig weist die Rastkontur eine korrespondierend ausgebildete Verzahnung mit über einen Kreisumfang der Rastkontur gleichmäßig verteilten Zähnen mit jeweils einer in den Montagedrehsinn weisenden Haltefläche auf. Insbesondere sind die Rastfläche und/oder die Haltefläche nicht senkrecht zur Montagerichtung ausgebildet. Gemäß einer bevorzugten Ausführungsform ist die Rastfläche teilweise gegen den Montagedrehsinn weisend und teilweise zum Schraubteil weisend ausgebildet. Zweckmäßig ist die Haltefläche teilweise in den Montagedrehsinn weisend und teilweise zum Gegenverbinder oder zum Zwischenring weisend ausgebildet. Insbesondere sind die Haltefläche und die Rastfläche derart korrespondierend zueinander ausgebildet, dass sie jeweils einen radialen Hinterschnitt bilden und den radialen Hinterschnitt des korrespondierenden Rastelements oder der Rastkontur zumindest in der Endlage hintergreifen. Vorteilhaft wird dadurch in Kombination mit der Losdrehsicherung eine nichtlösbare Schraubverbindung ermöglicht.

In einer besonderen Variante der vorgenannten Ausführung sind die Zähne der Verzahnung der Rastkontur axial gegen die Montagerichtung weisend hervorstehend ausgebildet. Zweckmäßig ist der Rastarm des Schraubteils axialelastisch in Montagerichtung weisend hervorstehend ausgebildet. Vorteilhaft kann über das Anzugsdrehmoment die Rastkontur mit dem Rastelement verspannt werden. Dadurch lässt sich insbesondere ein Spiel zwischen dem Rastelement und der Rastkontur vermeiden, welches z. B. schwingungsanfällig sein könnte.

Gemäß einer weiteren Variante sind die Zähne der Verzahnung der Rastkontur radial in den Durchgangskanal weisend hervorstehend ausgebildet und insbesondere ist der Rastarm des Schraubteils radialelastisch nach außen zum Durchgangskanal weisend hervorstehend ausgebildet. Besonders vorteilhaft kann gemäß dieser Ausführung die Anordnung des Rastelements zu der Haltekontur über den Weg des Schraubteils in Montagerichtung bis zur Endlage konstant gehalten werden. Weiterhin ist es vorteilhaft, dass eine axiale Länge der Schraubverbindung geringgehalten werden kann. Ebenfalls vorteilhaft ist die Losdrehsicherung bei dieser Ausführung von außerhalb überprüfbar und einer Beschädigung, welche durch ein axiales Verpressen entstehen könnte, wird vorgebeugt.

Eine weitere bevorzugte Ausführung der Erfindung sieht vor, dass das Rastelement als Verzahnung mit über einen Kreisumfang des Schraubteils gleichmäßig verteilten Zähnen mit jeweils einer gegen den Montagedrehsinn weisenden Haltefläche ausgebildet ist. Zweckmäßig weist die Rastkontur zumindest einen korrespondierend ausgebildeten, axialelastischen oder radialelastischen Rastarm mit zumindest einer in den Montagedrehsinn weisenden Rastfläche auf. Nach der Montage ist das Schraubteil unlösbar mit dem Gegenverbinder verschraubt. Unlösbar meint damit, dass ein Lösen nur mittels Zerstören, insbesondere einem plastischen Verformen oder einem Abbrechen des Rastelements oder der Rastkontur, möglich ist. Insbesondere wenn die Rastkontur mit dem Rastarm an dem Zwischenring ausgebildet ist, kann bei einer solchen Zerstörung des Rastarms für eine neue Verschraubung der Zwischenring ausgetauscht werden, ohne die Notwendigkeit eines neuen Schraubteils.

Eine besondere Variante der vorgenannten Ausführung sieht vor, dass der Rastarm der Rastkontur radial in den Durchgangskanal weisend hervorstehend ausgebildet ist und die Zähne der Verzahnung des Rastelements nach außen zum Durchgangskanal weisend hervorstehend ausgebildet sind. Besonders vorteilhaft kann gemäß dieser Ausführung die Anordnung des Rastelements zu der Haltekontur über den Weg des Schraubteils in Montagerichtung bis zur Endlage konstant gehalten werden. Weiterhin ist es vorteilhaft, dass eine axiale Länge der Schraubverbindung geringgehalten werden kann. Ebenfalls vorteilhaft ist die Losdrehsicherung bei dieser Ausführung von außerhalb überprüfbar und eine Beschädigung, welche durch ein axiales Verpressen entstehen könnte, wird vorgebeugt.

In einer weiteren bevorzugten Ausführung der Erfindung sind die Klemmarme als Rastkontur ausgebildet. Insbesondere ist die Rastkontur dadurch radialelastisch ausgebildet, so dass die Rastkontur aus dem Eingriff mit dem Rastelement herausgelöst werden kann.

Insbesondere sind die Klemmarme als Rastarme ausgebildet, wobei vorzugsweise die Rastfläche jeweils radial nach innen zum Durchgangskanal und in den Montagedrehsinn weisend ausgebildet ist. Bevorzugt überdeckt die Ausformung dabei zumindest teilweise die Rastfläche.

In einer weiteren vorteilhaften Variante erstreckt sich der Rastarm von einer Anbindungsstelle zum Zwischenring aus zu einem freien Ende entgegen dem Montagedrehsinn weisend. Insbesondere hat der als Rastkontur ausgebildete Rastarm eine radial in den Durchgangskanal ragende zahnförmige Geometrie mit einer in den Montagedrehsinn weisenden Rastfläche ausgebildet. Besonders vorteilhaft werden gemäß dieser Ausführung beim Demontieren des Schraubteils die Rastarme auf Zug beansprucht, was insbesondere plastischen Verformungen und Brüchen entgegenwirkt.

Die Ausformung ist insbesondere als ein Schutz der Rastkontur gegen äußere Einflüsse ausgebildet.

Vorteilhaft für die Herstellung ist der Zwischenring aus einer plastifizierten polymeren Masse spritzgegossen. Weiterhin ist in einer vorteilhaften Variante die Rastkontur monolithisch einstückig an dem Zwischenring angeformt.

Weiterhin wird die der Erfindung zugrunde gelegte Aufgabe durch ein Schraubteil für eine vorgenannte Schraubverbindung mit den Merkmalen einer der vorgenannten Ausführungen des Schraubteils gelöst.

Auch wird die der Erfindung zugrunde gelegte Aufgabe durch einen Zwischenring für eine vorgenannte Schraubverbindung mit den Merkmalen einer der vorgenannten Ausführungen des Zwischenrings gelöst.

Ebenfalls wird die der Erfindung zugrunde gelegte Aufgabe durch ein Schraubverbindungsset für eine vorgenannte Schraubverbindung durch ein vorgenanntes Schraubteil und einen vorgenannten Zwischenring gelöst.

Weitere vorteilhafte Ausgestaltungen der Erfindung ergeben sich aus der folgenden Figurenbeschreibung und den abhängigen Unteransprüchen.

Es zeigen:
- Fig. 1: eine Aufsicht senkrecht zu einer Montagerichtung einer Ausführung eines erfindungsgemäßen Schraubteils,
- Fig. 2: einen Gegenverbinder zur Verschraubung mit dem Schraubteil gemäß Fig. 1,
- Fig. 3: eine perspektivische Ansicht einer Ausführung einer erfindungsgemäßen Schraubverbindung,
- Fig. 4: eine perspektivische Ansicht einer Ausführung eines Zwischenrings,
- Fig. 5: eine Aufsicht in eine Montagerichtung auf den Zwischenring gemäß Fig. 4,
- Fig. 6: eine Aufsicht in die Montagerichtung auf eine weitere Ausführung einer Schraubverbindung mit dem Zwischenring gemäß Fig. 4,
- Fig. 7: eine perspektivische Ansicht einer weiteren Ausführung eines Schraubteils,
- Fig. 8: eine perspektivische Ansicht einer weiteren Ausführung eines Zwischenrings,
- Fig. 9: eine perspektivische Ansicht einer weiteren Ausführung einer Schraubverbindung mit dem Schraubteil gemäß Fig. 7 und dem Zwischenring gemäß Fig. 8,
- Fig. 10: eine perspektivische Ansicht einer weiteren Ausführung eines Schraubteils,
- Fig. 11: eine perspektivische Ansicht einer weiteren Ausführung eines Zwischenrings,
- Fig. 12: eine perspektivische Ansicht einer Ausführung eines weiteren Schraubteils,
- Fig. 13: eine perspektivische Ansicht einer Ausführung eines weiteren Zwischenrings,
- Fig. 14: eine perspektivische Ansicht einer Ausführung eines weiteren Gegenverbinders,
- Fig. 15: eine perspektivische Ansicht eines Schraubverbindungssets mit dem Schraubteil gemäß Fig. 12 und dem Zwischenring gemäß Fig. 13,
- Fig. 16: eine perspektivische Ansicht einer weiteren Ausführung einer Schraubverbindung mit dem Schraubverbindungsset gemäß Fig. 15 und einem Gegenverbinder gemäß Fig. 14,
- Fig. 17: eine perspektivische Ansicht einer Ausführung eines weiteren Schraubteils,
- Fig. 18: eine Aufsicht gegen die Montagerichtung auf das Schraubteil gemäß Fig. 17,
- Fig. 19: eine perspektivische Ansicht einer Ausführung eines weiteren Zwischenrings,
- Fig. 20: eine Aufsicht in die Montagerichtung auf den Zwischenring gemäß Fig. 19,
- Fig. 21: eine perspektivische Ansicht einer Ausführung eines weiteren Gegenverbinders,
- Fig. 22: eine perspektivische Ansicht einer weiteren Ausführung einer Schraubverbindung mit einem Schraubverbindungsset mit dem Schraubteil gemäß Fig. 17 und dem Zwischenring gemäß Fig. 19 und dem Gegenverbinder gemäß Fig. 21,
- Fig. 23: eine Aufsicht in die Montagerichtung auf die Schraubverbindung gemäß Fig. 22,
- Fig. 24: eine Teilschnittansicht der Schraubverbindung gemäß Fig. 22 entlang einer Schnittlinie A-A gemäß Fig. 23 ohne Gegenverbinder in einem Zustand, bevor das Schraubteil eine Endlage erreicht,
- Fig. 25: eine Teilschnittansicht der Schraubverbindung gemäß Fig. 22 in einem Zustand mit dem Schraubteil in seiner Endlage entlang einer Schnittlinie B-B gemäß Fig. 23,
- Fig. 26: eine Teilschnittansicht der Schraubverbindung gemäß Fig. 22 in einem Zustand mit dem Schraubteil in seiner Endlage entlang einer Schnittlinie A-A gemäß Fig. 23,
- Fig. 27: eine perspektivische Ansicht einer Ausführung eines weiteren Zwischenrings,
- Fig. 28: eine Aufsicht in die Montagerichtung auf den Zwischenring gemäß Fig. 27,
- Fig. 29: eine perspektivische Ansicht einer weiteren Ausführung einer Schraubverbindung mit einem Schraubverbindungsset mit einem Schraubteil und dem Zwischenring gemäß Fig. 27 und einem Gegenverbinder und
- Fig. 30: eine Aufsicht in die Montagerichtung auf die Schraubverbindung gemäß Fig. 29.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

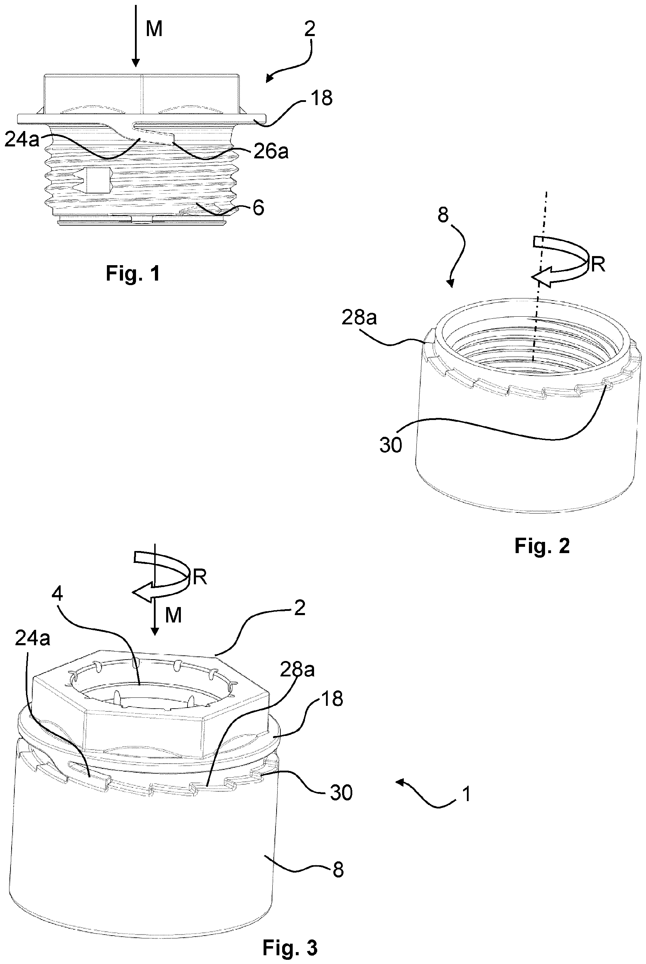

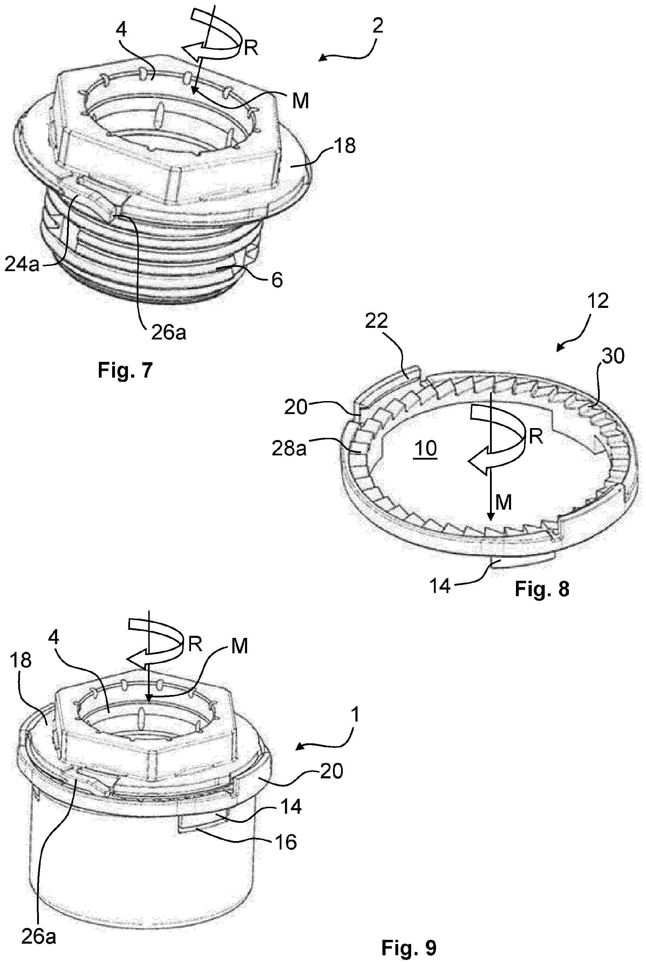

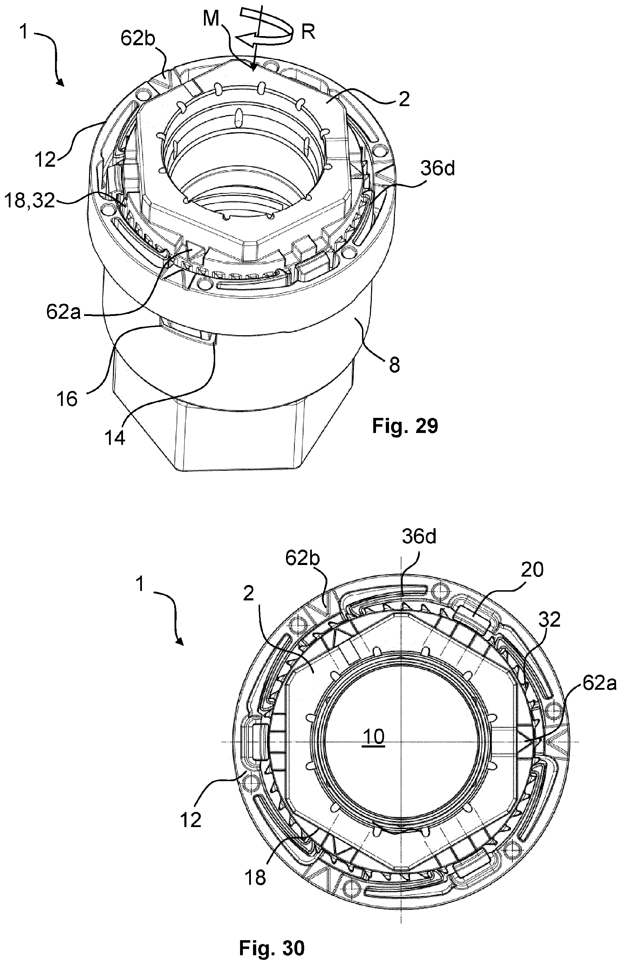

Fig. 1 zeigt ein Schraubteil 2, welches eine Schraubverbindung 1 aufweist. Die Schraubverbindung 1 ist exemplarisch in den Fig. 3, 9, 16, 22 und 29 dargestellt. Weitere Ausführungen des Schraubteils 2 sind auch in den Fig. 7, 10, 12 und 17 dargestellt. Das Schraubteil 2 weist einen ringförmigen Querschnitt auf. Insbesondere ist das Schraubteil 2 als eine Hohlschraube oder eine Mutter ausgebildet.

Zudem weist das Schraubteil 2 einen aus einer plastifizierten polymeren Masse spritzgegossenen Grundkörper auf.

Der Grundkörper weist, wie in den Fig. 1, 7, 10,12, 17 und 18 dargestellt, mindestens einen Innenkanal 4 zur Anordnung und/oder Durchführung eines Leitungssystemelements und ein Innengewinde und/oder ein Außengewinde 6 zur Verschraubung mit einem Gegenverbinder 8, wie in den Fig. 3, 9, 16, 22 und 29 dargestellt, auf. Zweckmäßig weist der Innenkanal 4 des Schraubteils 2 in einer weiteren Ausführung ergänzend zu dem Innengewinde und/oder dem Außengewinde 6 zur Verschraubung mit einem Gegenverbinder 8 ein weiteres Innengewinde für einen Gewindestutzen auf, wobei vorzugsweise der Gewindestutzen in eine Montagerichtung M mit einem zum weiteren Innengewinde des Innenkanals 4 korrespondierend ausgebildeten Gewindeabschnitt in das Schraubteil 2 einschraubbar ist. Die in Fig. 1, 7, 10, 12, 17 und 18 dargestellten Schraubteile 2 weisen ein Außengewinde 6 zur Verschraubung mit dem Gegenverbinder 8 auf.

Zur Verschraubung des Schraubteils 2 mit dem Gegenverbinder 8 ist das Schraubteil 2 bei einer Drehung in einem Montagedrehsinn R in die Montagerichtung M mit dem Gegenverbinder 8 verschraubbar.

Der Montagedrehsinn R ist abhängig vom Gewindelauf des Gegenverbinders 8 und des Schraubteils 2 und beschreibt den jeweiligen Drehsinn, in welche das Schraubteil 2 gedreht werden muss, um sich mit dem Gegenverbinder 8 zu verschrauben. In Fig. 1, 7, 10, 12, 17 und 18 sind die Schraubteile 2 alle als Rechtsgewinde ausgebildet, so dass der Montagedrehsinn R in die Montagerichtung M betrachtet dem Uhrzeigersinn entspricht. Bei einem, nicht dargestellten, Linksgewinde ist der Montagedrehsinn R in die Montagerichtung M betrachtet entsprechend gegen den Uhrzeigersinn orientiert.

Erfindungsgemäß ist, entsprechend dargestellt in Fig. 1, 7, 10, 12, 17 und 18, zumindest ein Rastelement monolithisch einstückig am Schraubteil 2 angeformt.

Besonders bevorzugt ist das Rastelement gegen die Montagerichtung M gesehen hinter dem Innengewinde und/oder Außengewinde 6 des Schraubteils 2 angeordnet. Alternativ oder Ergänzend ist das Rastelement zwischen dem Innengewinde und/oder Außengewinde 6 des Schraubteils 2 und einem Kraftangriff angeordnet. Der Kraftangriff ist insbesondere ein Eingriffselement, wie eine Sechskantschraubenkontur, für ein entsprechendes Werkzeug.

Weiterhin ist erfindungsgemäß eine Rastkontur in und gegen den Montagedrehsinn R sowie in die Montagerichtung M in einer Endlage des Schraubteils 2 am Gegenverbinder 8 fixiert ausgebildet. Die Rastkontur ist in den Fig. 2, 4, 5, 8, 11, 13, 19, 20, 27 und 28 dargestellt, wobei die Rastkontur gemäß der in Fig. 2 dargestellten Ausführung optional unmittelbar am Gegenverbinder 8 ausgebildet ist.

Erfindungsgemäß ist zumindest in der Endlage eine Drehung des Schraubteils 2 gegen den Montagedrehsinn R durch ein formschlüssiges Eingreifen des Rastelements in die Rastkontur blockiert.

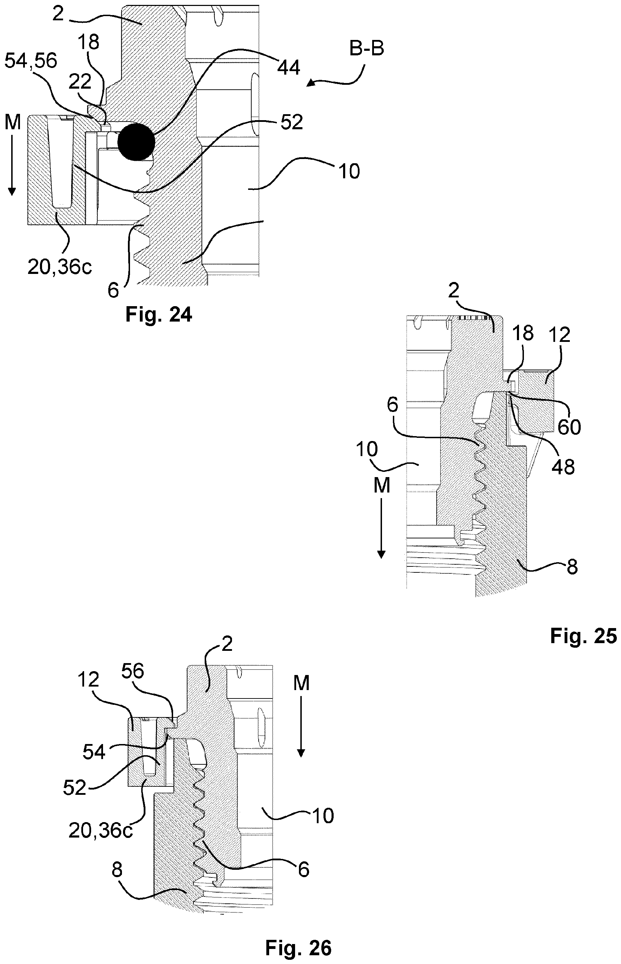

Die Endlage beschreibt im Sinne der Erfindung einen Verschraubungszustand, bei dem das Schraubteil 2 derart weit in Montagerichtung M mit dem Gegenverbinder 8 verschraubt ist, dass die Dichtigkeit ausreichend gewährleistet ist und die Anzahl der eingeschraubten Gewindegänge eine derartige Tragfähigkeit haben, dass ein Systemdruck gehalten werden kann. Insbesondere ist in der Endlage vorzugsweise ein Funktionselement, zum Beispiel eine Dichtfläche oder eine Dichtung 44 des Schraubteils 2, derart positioniert, dass die Dichtfunktion radial passend zum Leitungssystemelement oder Gegenverbinder 8 erfüllt ist. Eine Dichtung 44 ist exemplarisch in Fig. 24 dargestellt, wobei sich in der Fig. 24 das Schraubteil 2 nicht im Zustand der Endlage befindet. Die Fig. 25 und 26 zeigen die Schraubverbindung mit einem Schraubteil 2 in Endlage, wobei in den Fig. 25 und 26 die Dichtung 44 nicht dargestellt ist.

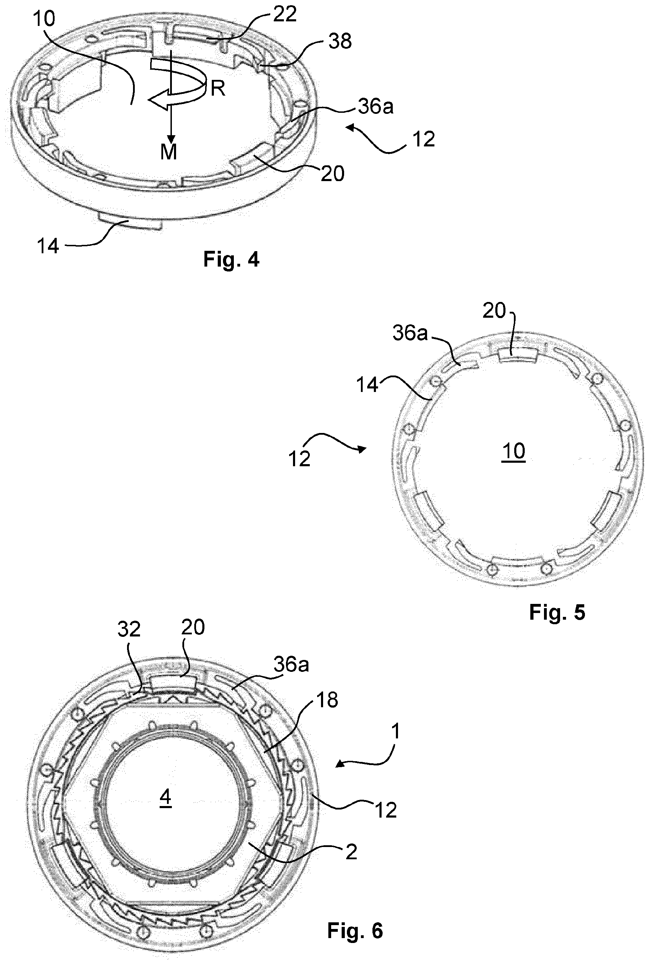

Gemäß einer besonders vorteilhaften Ausführung ist die Rastkontur an einem einen Durchgangskanal 10 umfassenden hohlzylinderartigen Zwischenring 12 ausgebildet. Exemplarische Ausführungen des die Rastkontur aufweisenden Zwischenrings 12 sind in den Fig. 4, 5, 8, 11, 13, 19 und 20 dargestellt. Vorteilhaft ist bei der in Fig. 2 dargestellten Ausführung kein Zwischenring 12 erforderlich.

Das Schraubteil 2 ist vorzugsweise mit dem Innengewinde und/oder dem Außengewinde 6 durch den Durchgangskanal 10 hindurchführbar, wobei zweckmäßig, wie in den Fig. 9, 16, 22 und 29 dargestellt, der Zwischenring 12 in und gegen den Montagedrehsinn R, zumindest in der Endlage, an dem Gegenverbinder 8 fixiert ist.

Vorzugsweise weist der Zwischenring 12 zumindest einen sich in Montagerichtung M erstreckenden Haltearm 14 auf. Ausführungen des Zwischenrings 12 mit Haltearm 14 sind in den Fig. 4, 8, 11, 13, 19 und 27 dargestellt. Der Haltearm 14 ist zweckmäßig derart ausgebildet, dass er in eine Haltekontur, insbesondere wie in den Fig. 9, 14, 16, 21, 22 und 29 dargestellt in eine Haltenut 16, des Gegenverbinders 8 einführbar ist und in eingeführter Lage eine Verdrehung des Zwischenrings 12 in und gegen den Montagedrehsinn R relativ zum Gegenverbinder 8 formschlüssig blockiert.

Die Haltenut 16 weist, gemäß einer nicht dargestellten Ausführung, insbesondere an einer gegen die Montagerichtung M weisenden Haltefläche winkelige Flächen und/oder Hinterschnitte auf, die mit korrespondierend an dem Haltearm 14 ausgebildeten Gegenflächen zusammenwirken und ein Herausspringen des Haltearmes 14 aus der Haltenut 16 verhindern.

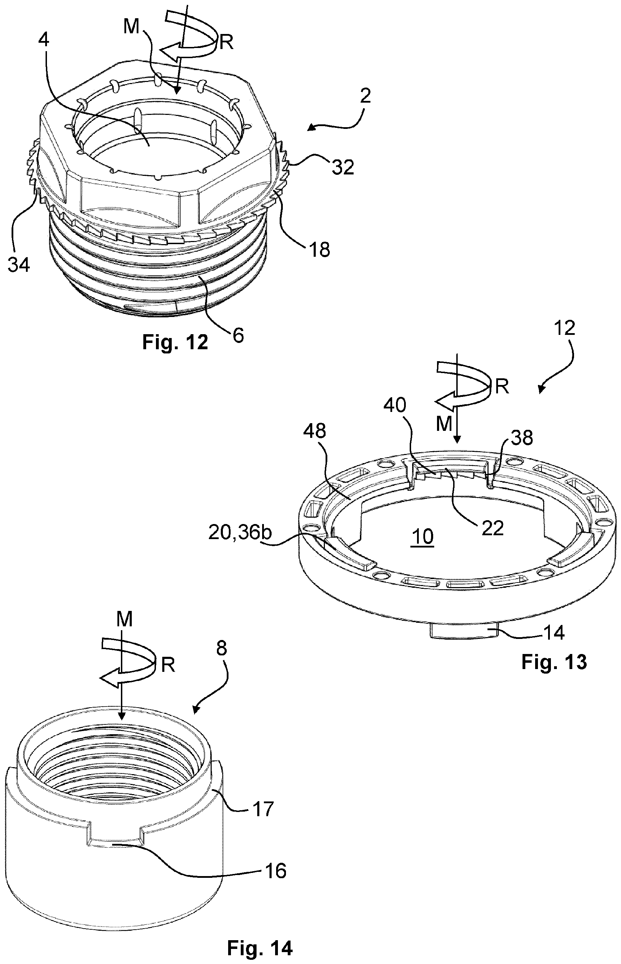

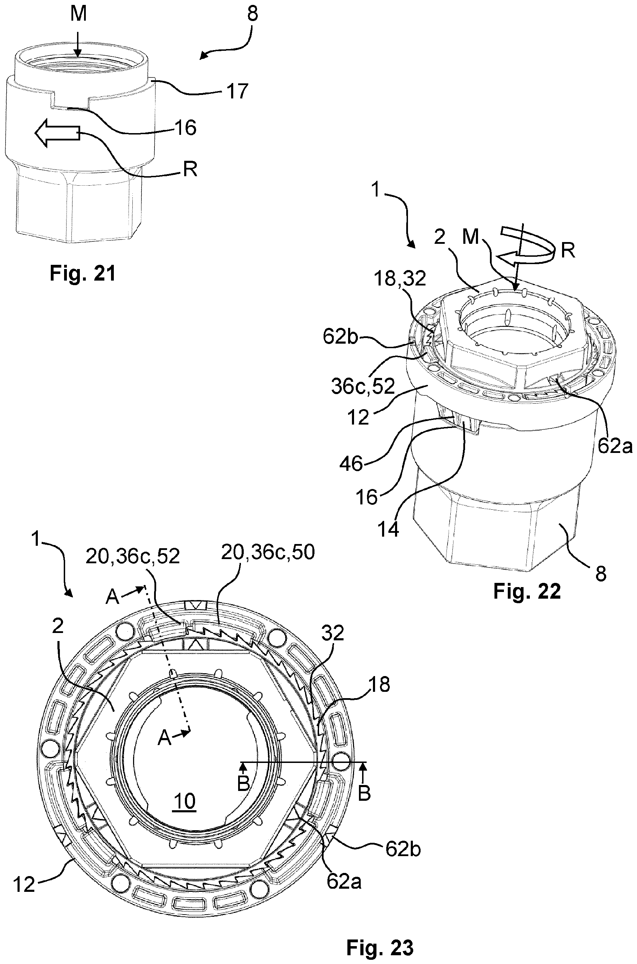

Von besonderem Vorteil weist der Gegenverbinder 8 Rampen 17 auf. Diese Ausführung ist in den Figuren 14 und 21 dargestellt. Die Rampen 17 sind dabei am Umfang des Gegenverbinders angeordnet und weisen mit einer Gleitfläche gegen die Montagerichtung M. Jeweils eine Rampe 17 verbindet eine erste Haltenut 16 mit einer zweiten Haltenut 16, wobei die Rampen 17 dabei gegen den Montagedrehsinn R gegen die Montagerichtung M ansteigen. Diese Steigung ist an die Steigung des Innengewindes des Gegenverbinders 8 angepasst. Vorteilhaft gleiten die Haltearme 14 des Zwischenrings 12 über die Rampen 17 bzw. über die Gleitflächen und verringern die Gefahr, dass die Haltearme 14 des Zwischenrings 12 beim Einschrauben des Schraubteils 2 beschädigt werden.

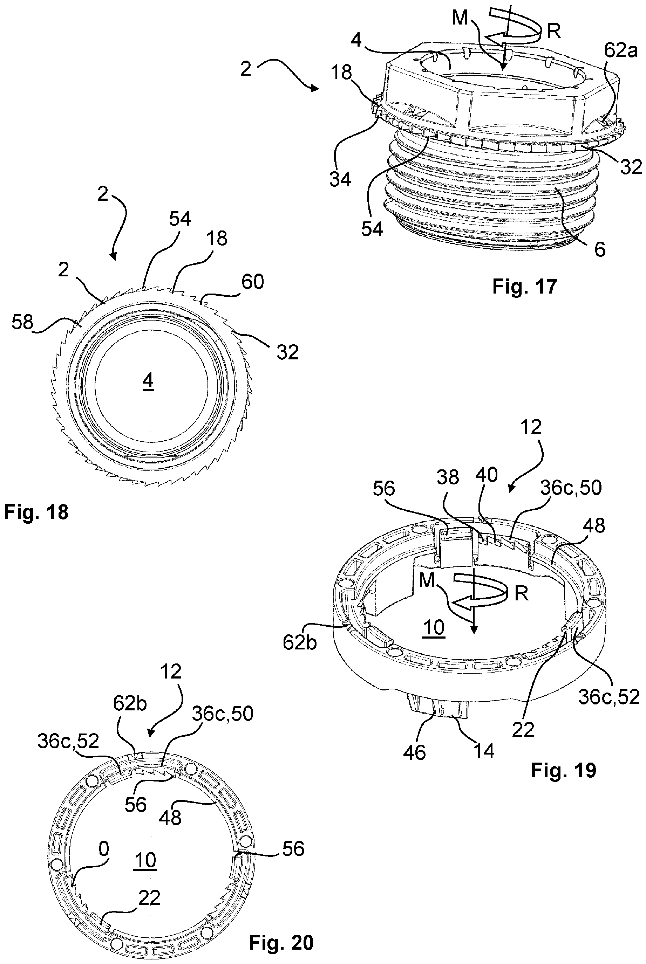

Besonders vorteilhaft weist der Haltearm 14, wie in den Figuren 19 und 22 dargestellt, zumindest eine sich in Montagerichtung M erstreckende Verstärkungsrippe 46 auf. Diese erhöht die Steifigkeit, insbesondere radial zu der Montagerichtung M, und verhindert, dass sich der Haltearm 14 radial zur Montagerichtung M aus der Haltenut 16 heraushebt und eine Verdrehung des Zwischenrings 12 relativ zu dem Gegenverbinder 8 freigibt.

In den Fig. 9, 16, 22 und 29 ist in Bezug auf die Anordnung des Zwischenrings 12 am Gegenverbinder 8 lediglich der Zustand des Schraubteils 2 in seiner Endlage dargestellt. Bevorzugt ist dabei der Haltearm 14 spätestens in der Endlage des Schraubteils 2 in der in der Haltekontur eingeführten Lage angeordnet. Gemäß den vorteilhaften Ausführungen, die in den Fig. 9, 16, 22 und 29 dargestellt sind, sind der Haltearm 14 und die Haltekontur derartig ausgebildet, dass der Haltearm 14 bereits in einer gegen die Montagerichtung M von der Endlage beabstandeten Einführlage in die Haltekontur eingreift.

Eine vorteilhafte Ausführung des Schraubteils 2 sieht vor, dass das Schraubteil 2 in Montagerichtung M betrachtet vor dem Innengewinde und/oder dem Außengewinde 6 einen radial hervorstehenden Auflageflansch 18 ausgebildet hat. Zweckmäßig weist dabei der Auflageflansch 18 einen maximalen Außendurchmesser auf, welcher größer ist als ein minimaler Durchmesser des Durchgangskanals 10 des Zwischenrings 12. Die Ausführung des Schraubteils 2 mit einem Auflageflansch 18 ist in den Fig. 1, 7, 10, 12 und 17 dargestellt.

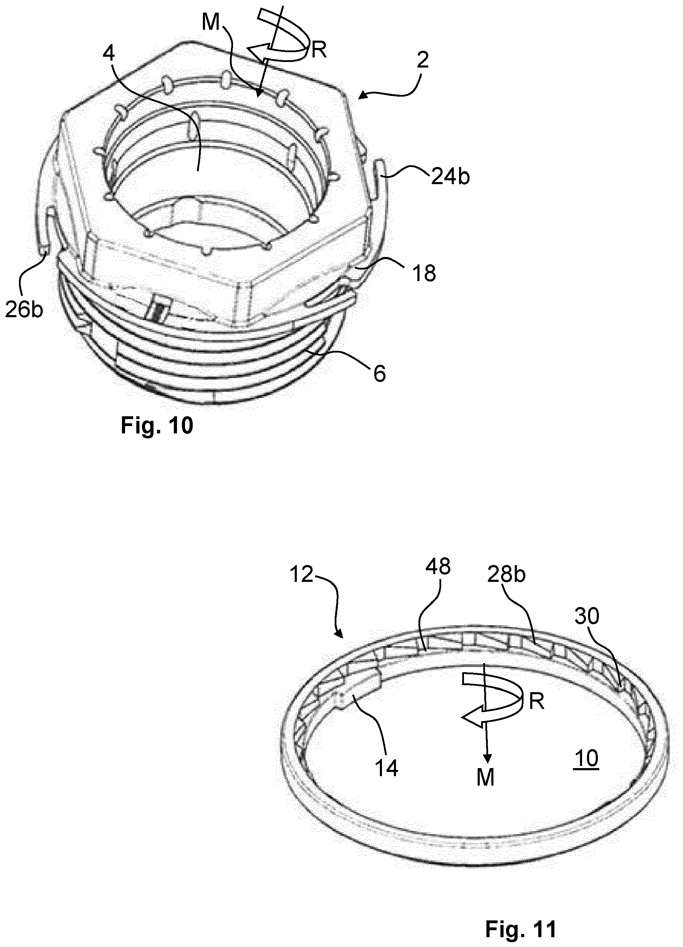

Zweckmäßig ist der Zwischenring 12, wie in den Fig. 9, 16, 22 und 29 dargestellt, in dem Zustand des Schraubteils 2 in Endlage zwischen dem Auflageflansch 18 und dem Gegenverbinder 8 derart angeordnet, dass eine Bewegung des Zwischenrings 12 gegen die Montagerichtung M blockiert ist. Vorzugsweise weist der Zwischenring 12 eine Lagerkante 48, wie in den Fig. 11, 13, 19 und 27 dargestellt, auf, welche den Durchmesser des Durchgangskanals 10 auf den minimalen Durchmesser des Zwischenrings 12 reduziert.

Die Fig. 1, 7, 10, 12 und 17 zeigen zudem eine bevorzugte Ausführung, gemäß welcher das Rastelement am Auflageflansch 18 des Schraubteils 2 angeformt ist. Insbesondere ist in den Fig. 1 und 7 ein an dem Auflageflansch 18 angeformtes, sich in Montagerichtung M erstreckendes Rastelement dargestellt. Beispielhaft ist in den Fig. 10, 12 und 17 ein sich an dem Auflageflansch 18 angeordnetes, sich radial nach außen erstreckendes Rastelement dargestellt.

Vorzugsweise ist die Rastkontur monolithisch einstückig an dem Zwischenring 12 angeformt. Beispielhaft ist in den Fig. 4, 5, 11, 13, 19, 20 und 28 eine an dem Zwischenring 12 angeordnete, sich radial nach innen in den Durchgangskanal 10 des Zwischenrings 12 erstreckende Rastkontur dargestellt. Die in Fig. 8 dargestellte Ausführung zeigt eine alternative Ausführung, gemäß welcher die Rastkontur am Zwischenring 12 angeformt ist und sich axial gegen die Montagerichtung M weisend erstreckt.

Gemäß einer bevorzugten Ausführung der Erfindung hat der Zwischenring 12 mit einem freien Ende gegen die Montagerichtung M weisende Klemmarme 20 angeformt. Das freie Ende beschreibt insbesondere ein nicht mit dem Zwischenring 12 verbundenes Ende des jeweiligen Klemmarms 20. Ausführungen des Zwischenrings 12 mit Klemmarmen 20 sind in den Fig. 4, 8, 13, 19 und 27 dargestellt.

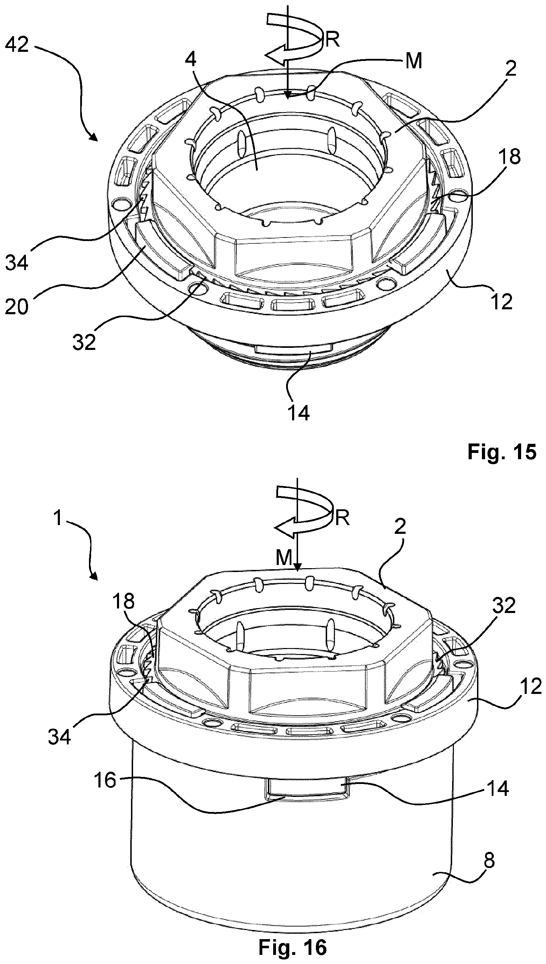

Bevorzugt sind die Klemmarme 20 derart ausgebildet, dass beim Einführen des Schraubteils 2 in den Durchgangskanal 10 die Klemmarme 20 von dem Auflageflansch 18 radialelastisch nach außen geformt werden und sich in Montagerichtung M gesehen vor dem Auflageflansch 18 elastisch rückformen. Vorteilhaft blockieren die Klemmarme 20 formschlüssig dadurch ein axiales Trennen des Zwischenrings 12 vom Schraubteil 2. Ein an dem Schraubteil 2 derart angeordneter Zwischenring 12 ist perspektivisch in Fig. 15 dargestellt.

Insbesondere kann das Schraubteil 2 mit dem Zwischenring 12 vor dem Verschrauben mit dem Gegenverbinder 8 verbunden werden, wie es insbesondere in Fig. 15 dargestellt ist, oder erst bei dem Verschrauben des Schraubteils 2 mit dem Gegenverbinder 8, so dass zumindest ab dem Erreichen der Endlage des Schraubteils 2 die Klemmarme 20 formschlüssig ein axiales Trennen blockieren. Die in den Fig. 9, 16, 22 und 29 dargestellten Verschraubungen sind in Endlage des Schraubteils 2 dargestellt, wobei der Zwischenring 12 bei beiden Ausführungen sowohl während des Verschraubens als auch vor dem Verschrauben an dem Schraubteil 2 angeordnet werden kann.

In einer vorteilhaften Ausführung sind die Klemmarme 20 radialelastisch ausgebildet und weisen an ihren freien Enden eine sich radial in Richtung des Durchgangskanals 10 erstreckende Ausformung 22 auf. Insbesondere die in den Fig. 4, 8, 13, 19, 20 und 27 dargestellten Klemmarme 20 weisen jeweils eine derartige Ausformung 22 auf. Zweckmäßig sind die Ausformungen in einem unverformten Zustand der Klemmarme 20, die Fig. 4, 8, 13, 19, 20 und 27 zeigen insbesondere jeweils den unverformten Zustand, auf einer Kreisbahn mit einem geringeren Durchmesser als der maximale Außendurchmesser des Auflageflansches 18 angeordnet.

Gemäß einer weiteren Variante der Erfindung ist vorzugsweise das Rastelement als radial- oder axialelastischer Rastarm 24a, 24b mit zumindest einer gegen den Montagedrehsinn R weisenden Rastfläche 26a ausgebildet. Beispielsweise ist in Fig. 1, 7 und 10 das Rastelement mit einem Rastarm 24a, 24b dargestellt, wobei davon die in Fig. 1 und 7 dargestellten Ausführungen jeweils einen axialelastischen Rastarm 24a aufweisen und die in Fig. 10 dargestellte Ausführung einen radialelastischen Rastarm 24b aufweist. Insbesondere kann die Anzahl der Rastelemente, insbesondere der Rastarme 24a, 24b, welche das Schraubteil 2 aufweist, variieren. Vorzugsweise weist das Schraubteil 2 zwei und besonders bevorzugt vier Rastelemente, insbesondere Rastarme 24a, 24b auf.

Zweckmäßig ist die Rastkontur eine korrespondierend zu dem als Rastarm 24a, 24b ausgebildeten Rastelement als Verzahnung 28a, 28b ausgebildet. Vorteilhaft weist die Verzahnung 28a, 28b über einen Kreisumfang der Rastkontur gleichmäßig verteilte Zähne auf, die mit jeweils einer Haltefläche 30 in den Montagedrehsinn R weisen. Die Anzahl der Zähne bestimmt vorteilhaft die Auflösung bzw. die Schrittgröße, in welcher das Schraubteil 2 gegen den Montagedrehsinn R blockiert wird. Insbesondere ist bei einer großen Anzahl von Zähnen ein exaktes Positionieren und Blockieren des Schraubteils 2 gegen den Montagedrehsinn R möglich.

Gemäß den Ausführungen, welche in den Figuren 2 und 8 dargestellt sind, sind vorteilhaft die Zähne der Verzahnung 28a der Rastkontur axial gegen die Montagerichtung M weisend hervorstehend ausgebildet. Zweckmäßig ist dazu korrespondierend der Rastarm 24a des Schraubteils 2 axialelastisch in Montagerichtung M weisend hervorstehend ausgebildet. Vorteilhaft ist dabei bei einer Ausführung mit einem Zwischenring 12 der Zwischenring 12 in Endlage zwischen dem Auflageflansch 18 und dem Gegenverbinder 8 verspannt, so dass der Zwischenring 12 eine sichere Einbaulage in der Endlage des Schraubteils 2 aufweist.

Nach einer weiteren bevorzugten Ausführung, welche in der Fig. 11 dargestellt ist, sind die Zähne der Verzahnung 28b der Rastkontur radial in den Durchgangskanal 10 weisend hervorstehend ausgebildet. Zweckmäßig ist dabei der Rastarm 24b des Schraubteils 2, dargestellt in Fig. 10, radialelastisch nach außen zum Durchgangskanal 10 weisend hervorstehend ausgebildet. Vorteilhaft kann die formschlüssige Verbindung zwischen dem Rastelement und der Rastkontur bei sich jeweils radial erstreckenden Ausführungen leichter kontrolliert werden.

Nach einer weiteren bevorzugten Ausführung ist das Rastelement als Verzahnung 32 mit über einen Kreisumfang des Schraubteils 2 gleichmäßig verteilten Zähnen mit jeweils einer gegen den Montagedrehsinn R weisenden Haltefläche 34 ausgebildet. Das Rastelement als Verzahnung 32 ausgebildet ist in Fig. 12, 17 und 18 dargestellt, wobei das in Fig. 12 dargestellte Schraubteil 2 auch dem Schraubteil 2 der Schraubverbindung 1 gemäß Fig. 6 entspricht. Die Rastkontur weist dabei vorzugsweise zumindest einen korrespondierend ausgebildeten, axialelastischen oder radialelastischen Rastarm 36a, 36b, 36c, 36d mit zumindest einer in den Montagedrehsinn R weisenden Rastfläche 38 auf. In den Fig. 4, 5 und 13 ist der Rastarm radialelastisch ausgebildet.

Vorteilhaft ist gemäß vorgenannter Ausführung der Rastarm 36a, 36b, 36c, 36d der Rastkontur radial in den Durchgangskanal 10 weisend hervorstehend ausgebildet und die Zähne der Verzahnung des Rastelements sind insbesondere radial nach außen zum Durchgangskanal 10 weisend hervorstehend ausgebildet. Insbesondere ist die Anzahl der Rastkonturen bzw. der Rastarme 36a, 36b, 36c, 36d am Zwischenring 12 variierbar. Insbesondere weist der Zwischenring 12 sechs Rastarme 36a, 36d, wie in den Fig. 4, 5 und 28 dargestellt, oder drei Rastarme 36b, 36c, wie in den Fig. 13, 19 und 20 dargestellt, auf. Zweckmäßig lässt sich die Auflösung der Blockierung über die Anzahl der Zähne am Schraubteil 2 einstellen.

Fig. 13, 19 und 20 zeigen eine besonders vorteilhafte Variante des Zwischenrings 12, gemäß welcher die Klemmarme 20 als Rastarme 36b, 36c der Rastkontur ausgebildet sind.

Vorteilhaft ist das Rastelement des Schraubteils 2 als Verzahnung 32, wie in den Fig. 12, 17 und 18 dargestellt, mit über einen Kreisumfang des Schraubteils 2 gleichmäßig verteilten Zähnen mit jeweils einer gegen den Montagedrehsinn R weisenden Haltefläche 34 ausgebildet. Zweckmäßig weist der als Rastkontur ausgebildete Rastarm 36b, 36c, 36d eine korrespondierend ausgebildete zahnförmige Geometrie 40, 41 mit einem oder mehreren radial in den Durchgangskanal 10 hervorstehenden Zähnen auf, die insbesondere jeweils mit einer Rastfläche 38 in den Montagedrehsinn R weisen.

In einer besonderen Ausführung ist die jeweilige Rastfläche 38 in Montagerichtung M gesehen hinter der Ausformung 22 angeordnet, so dass die Ausformung 22 zumindest teilweise radial die Rastfläche 38 überdeckt. Insbesondere ist in Fig. 13 eine Variante dargestellt, gemäß welcher die Ausformung 22 die Rastflächen 38 in Montagerichtung M gesehen vollständig überdeckt.

Gemäß einer weiteren vorteilhaften, insbesondere in Fig. 19 dargestellten, Ausführung ist der Klemmarm 20 als Rastarm 36c der Rastkontur ausgebildet. Insbesondere ist der Rastarm 36c in Umfangsrichtung des Schraubteils 2 in zwei Teilarme 50, 52 getrennt, wobei der erste Teilarm 50 die zahnförmige Geometrie 40 mit Rastflächen 38 aufweist und der zweite Teilarm 52 die Ausformung 22 aufweist. Zweckmäßig ist die jeweilige Rastfläche 38 in Montagerichtung M gesehen axial hinter der Ausformung 22 und zum Montagedrehsinn R versetzt zu der Ausformung 22 angeordnet. Der Rastarm 36c ist dadurch nach seiner Funktion geteilt, wobei der zweite Teilarm 52 eine Haltefunktion für die Vormontage des Zwischenringes 12 erfüllt und der erste Teilarm 50 die zahnförmige Geometrie 40 der Losdrehsicherung aufweist. Dies hat den Vorteil, dass die jeweiligen Funktionen voneinander entkoppelt werden, so dass der Zwischenring 12 mit geringeren Kräften vormontiert werden kann, als beispielsweise gemäß der in Fig. 15 dargestellten Ausführung.

Weiterhin kann die Anzahl der Zähne und der an ihnen ausgebildeten Rastflächen 38 an die Verzahnung 32 des Rastelements angepasst werden. Vorzugsweise weist der Zwischenring 12 drei als Rastarme 36b, 36c ausgebildete Klemmarme 20 auf, die jeweils vorzugsweise drei bis acht, insbesondere vier bis sechs, besonders bevorzugt fünf Zähne aufweisen.

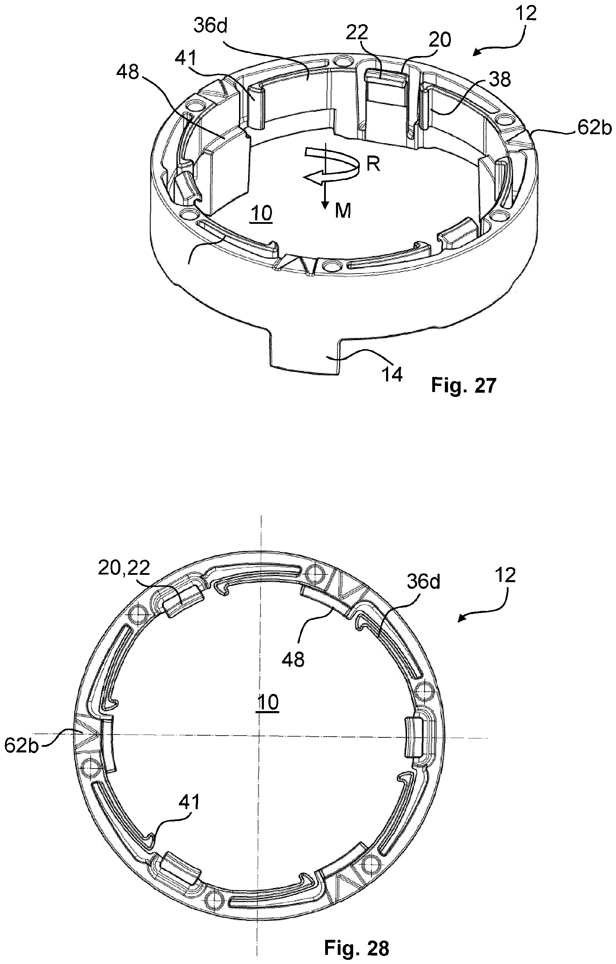

Gemäß eine weiteren alternativen Ausführung, welche insbesondere in den Fig. 27 bis 30 dargestellt ist, erstreckt sich der Rastarm 36d von einer Anbindungsstelle zum Zwischenring 12 aus zu einem freien Ende entgegen dem Montagedrehsinn R weisend. Insbesondere hat der als Rastkontur ausgebildete Rastarm 36d an dem freien Ende die radial in den Durchgangskanal 10 ragende zahnförmige Geometrie 41 mit einer in den Montagedrehsinn R weisenden Rastfläche 38 ausgebildet. Zweckmäßig weist die in den Fig. 27 bis 30 dargestellte Variante sechs über den Umfang des Zwischenrings 12 gleichmäßig verteilte, als Rastkontur ausgebildete Rastarme 36d auf.

Vorteilhaft kann der Zwischenring 12 spritzgegossen aus einer plastifizierten polymeren Masse hergestellt sein. Vorteilhaft kann der Zwischenring 12 dadurch sowohl aufwandsarm als auch schnell produziert werden.

In den Fig. 17 und 24 bis 26 ist eine besonders vorteilhafte Ausführung der Verzahnung 32 des Schraubteils 2 dargestellt. Hierbei weist das Schraubteil 2 gleichmäßig verteilte Zähne auf, wobei zumindest ein Teil der Zähne, wie in Fig. 18 dargestellt, Schrägflächen 54 auf der in Montagerichtung M weisenden Seite ausgebildet haben können. Diese Schrägflächen 54 treffen, insbesondere bei der Montage, auf den korrespondierend ausgebildeten Rastarm 36a, 36b, 36c, 36d bzw. die Klemmarme 20, wobei die Schrägflächen 54 eine radialelastische Verformung der Rastarme 36a, 36b, 36c, 36d begünstigen, weil die Rastarme 36a, 36b, 36c, 36d bzw. die Klemmarme 20 des Zwischenringes 12 somit leichter gespreizt werden können.

Besonders vorteilhaft weist, wie in den Fig. 19, 20 und 24 bis 26 dargestellt, die Ausformung 22, insbesondere des zweiten Teilarms 52 des Rastarm 36c, und/oder die zahnförmige Geometrie 40, 41 der Rastkontur, insbesondere des ersten Teilarms 50 des Rastarm 36c oder des Rastarms 36b, eine gegen die Montagerichtung M weisende Schrägfläche 56 auf. Diese Schrägflächen 56 treffen, insbesondere bei der Montage, auf die korrespondierend ausgebildete Verzahnung 32 des Schraubteils 2. Die Schrägflächen 56 verbessern die Montage, weil die Rastarme 36a, 36b, 36c, 36d bzw. die Klemmarme 20 des Zwischenringes 12 somit leichter gespreizt werden können.

Gemäß einer bevorzugten Ausführung, die in den Fig. 24 bis 26 dargestellt ist, weist die Verzahnung 32 des Schraubteils 2 gleichmäßig verteilte Zähne auf, wobei zumindest ein Teil der Zähne, wie in Fig. 18 dargestellt, die Schrägflächen 54 auf der in Montagerichtung M weisenden Seite ausgebildet haben und die Ausformung 22, insbesondere des zweiten Teilarms 52 des Rastarm 36c, und/oder die zahnförmige Geometrie 40, 41 der Rastkontur, insbesondere des ersten Teilarms 50 des Rastarm 36c oder des Rastarms 36b, die gegen die Montagerichtung M weisende Schrägfläche 56 aufweist. Diese Schrägflächen 54 der Verzahnung 32 und die Schrägflächen 56 der zahnförmigen Geometrie 40 sind zweckmäßig derart korrespondierend zueinander ausgebildet, dass sie bei der Montage, wie in Fig. 24 dargestellt, aufeinander gleiten und die Montage erleichtern.

Zweckmäßig sind die Schrägflächen 54 der Verzahnung 32 des Schraubteils 2 vorzugsweise in drei um den Umfang des Schraubteils 2 gleichmäßig, insbesondere um 120° versetzt, verteilten Montagezonen 58 ausgebildet. Diese Montagezonen 58 sind dabei in Übereinstimmung mit den als Klemmarmen 20 ausgebildeten Rastarmen 36b, 36c angeordnet. Die Aufteilung in Montagezonen 58 hat den Vorteil, dass der Zwischenring 12 nach der Montage kippfrei gehalten werden kann, wenn in Endlage des Schraubteils 2 im Zwischenring 12 die Rastarme 36b, 36c mit ihren zahnförmigen Geometrien 40 in einer Montagezone 58 des Schraubteils 2, wie in Fig. 26 dargestellt, angeordnet sind. Insbesondere die nicht abgeschrägten Zähne der Verzahnung 32 können dadurch eine sichere, insbesondere kippfreie Anordnung des Zwischenrings 12 generieren, indem sie, wie in Fig. 25 dargestellt, eine senkrecht zur Montagerichtung erstreckende Auflagefläche 60 aufweisen. Diese Auflagefläche 60 erstreckt sich besonders bevorzugt parallel zu der Lagerkante 48 des Zwischenrings 12. Entsprechend der zu den Fig. 17 bis 26 vorgestellten Ausführung sieht es eine besondere Ausführung vor, dass die in den Fig. 27 bis 30 dargestellte Variante ebenfalls Montagezonen und korrespondierend dazu ausgebildete Rastarme 36d aufweist.

Da es hinsichtlich der Kippfreiheit des Zwischenring 12 vorteilhaft ist, wenn die Rastarme 36b, 36c, 36d in der Endlage des Schraubteils, wie in Fig. 23 dargestellt, in einer Montagezone 58 angeordnet sind, weist das Schraubteil 2 gemäß einer weiteren Variante ein Ortungselement auf. Das Ortungselement kann zweckmäßig die Anordnung der Montagezone relativ zum Schraubteil und/oder den zwischen den Montagezonen 58 angeordneten freien Bereich anzeigen. Zweckmäßig ist das Ortungselement eine, wie in den Fig. 17 und 22, 23, 29 und 30 dargestellt, optisch und/oder taktil wahrnehmbare Kodierung 62a, bspw. eine pfeilförmige Erhebung.

Vorzugsweise weist der Zwischenring 12 alternativ oder ergänzend ebenfalls ein Ortungselement auf, insbesondere, wie in den Fig. 19 bis 23, 29 und 30 dargestellt, eine optisch und/oder taktil wahrnehmbare Kodierung 62b, bspw. eine pfeilförmige Erhebung.

Im Folgenden wird beispielhaft ein Montageverfahren einer zuvor beschriebenen Schraubverbindung 1 vorgestellt.

Entsprechend den Fig. 12 bis 14 besteht ein erster Schritt im Bereitstellen eines Schraubteils 2 nach einer der vorgenannten Ausführungen, optional eines Zwischenrings 12 nach einer der vorgenannten Ausführungen und eines Gegenverbinders 8 nach einer der vorgenannten Ausführungen.

Sofern ein Zwischenring 12 vorteilhaft verwendet wird, wird der Zwischenring 12 vorzugsweise vor dem Verschrauben des Schraubteils 2 mit dem Gegenverbinder 8 des Schraubteils 2 verbunden bzw. das Schraubteil 2 wird mit dem Innengewinde und/oder Außengewinde 6 durch den Durchgangskanal 10 des Zwischenrings 12 gesteckt. In Fig. 15 ist ein derartiges aus dem Zwischenring 12 und dem Schraubteil 2 zusammengeführtes Schraubverbindungsset 42 dargestellt, wobei der Zwischenring 12 mit Haltearmen 14 den als Rastelement ausgebildeten Auflageflansch 18 umgreift.

Nachfolgend wird das Schraubteil 2 in Montagerichtung M axial mit dem Gegenverbinder 8 durch ein Drehen im Montagedrehsinn R verschraubt. Im Ausführungsbeispiel in den Fig. 16, 22 und 29 ist zu erkennen, dass ab der Einführlage der Haltearm 14 des Zwischenrings 12 in der als Haltenut 16 ausgebildeten Haltekontur eine Drehung des Zwischenrings 12 in und gegen den Montagedrehsinn R blockiert, so dass das Schraubteil 2 relativ zum Zwischenring 12 und relativ zum Gegenverbinder 8 drehbar ist. Die Fig. 16, 22 und 29 zeigen dabei ein vollständig verschraubtes Schraubteil 2 in Endlage.

Weiterhin zeigen die Fig. 1, 7, 10, 12, 17 und 18 beispielhaft erfindungsgemäße Schraubteile 2 für eine vorgehend beschriebene Schraubverbindung 1, welche die Merkmale der Schraubteile 2 zumindest einer der vorgenannten Ausführungen aufweist.

Weiterhin zeigen die Fig. 4, 5, 8, 11, 13, 19, 20, 27 und 28 bespielhaft erfindungsgemäße Zwischenringe 12 für eine vorgehend beschriebene Schraubverbindung 1, welche die Merkmale der Zwischenringe 12 zumindest einer der vorgenannten Ausführungen aufweist.

Weiterhin zeigt beispielsweise Fig. 15 ein erfindungsgemäßes Schraubverbindungsset 42 für eine vorgehend beschriebene Schraubverbindung 1, welche sowohl ein Schraubteil 2 als auch einen Zwischenring 12 der jeweils zuvor beschriebenen Art aufweist.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Schraubverbindung
- 2: Schraubteil
- 4: Innenkanal
- 6: Außengewinde
- 8: Gegenverbinder
- 10: Durchgangskanal
- 12: Zwischenring
- 14: Haltearm
- 16: Haltenut
- 17: Rampe
- 18: Auflageflansch
- 20: Klemmarm
- 22: Ausformung
- 24a,24b: Rastarm des Rastelements
- 26a,26b: Rastfläche des Rastarms des Rastelements
- 28a,28b: Verzahnung der Rastkontur
- 30: Haltefläche der Verzahnung der Rastkontur
- 32: Verzahnung des Rastelements
- 34: Haltefläche der Verzahnung des Rastelements
- 36a,36b,36c, 36d: Rastarm der Rastkontur
- 38: Rastfläche des Rastarms der Rastkontur
- 40,41: Zahnförmige Geometrie
- 42: Verschraubungsset
- 44: Dichtung
- 46: Verstärkungsrippe
- 48: Lagerkante
- 50: Erster Teilarm
- 52: Zweiter Teilarm
- 54: Schrägflächen der Verzahnung des Schraubteils
- 56: Schrägflächen der zahnförmigen Geometrie der Rastkontur
- 58: Montagezone
- 60: Auflagefläche
- 62a,62b: Kodierung

- R: Montagedrehsinn
- M: Montagerichtung

## Patentansprüche

1. Schraubverbindung (1) aufweisend einen Gegenverbinder (8) und ein Schraubteil (2) mit einem ringförmigen Querschnitt, insbesondere eine Hohlschraube oder eine Mutter, die einen hohlzylindrischen und aus einer plastifizierten polymeren Masse spritzgegossenen Grundkörper aufweist, wobei der Grundkörper mindestens einen Innenkanal (4) zur Anordnung und/oder Durchführung eines Leitungssystemelements und ein Innengewinde und/oder ein Außengewinde (6) zur Verschraubung mit dem Gegenverbinder (8) aufweist, wobei das Schraubteil (2) bei einer Drehung in einem Montagedrehsinn (R) in eine Montagerichtung (M) mit dem Gegenverbinder (8) verschraubbar ist, wobei in einer Endlage des Schraubteils (2) das Schraubteil (2) derart weit in Montagerichtung (M) mit dem Gegenverbinder (8) verschraubt ist, dass die Dichtigkeit ausreichend gewährleistet ist und die Anzahl der eingeschraubten Gewindegänge eine derartige Tragfähigkeit haben, dass ein Systemdruck gehalten werden kann, wobei zumindest ein Rastelement (24a, 24b, 32) monolithisch einstückig am Schraubteil (2) angeformt ist und eine Rastkontur (28a, 28b, 36a, 36b, 36c, 36d) im und gegen den Montagedrehsinn (R) sowie in Montagerichtung (M) in der Endlage des Schraubteils (2) am Gegenverbinder (8) fixiert ausgebildet ist,
**dadurch gekennzeichnet, dass**
zumindest in der Endlage eine Drehung des Schraubteils (2) gegen den Montagedrehsinn (R) durch ein formschlüssiges Eingreifen des Rastelements (24a, 24b, 32) in die Rastkontur (28a, 28b, 36a, 36b, 36c, 36d) blockiert ist.

2. Schraubverbindung (1) nach Anspruch 1,
**dadurch gekennzeichnet, dass** das Rastelement (24a, 24b, 32) gegen die Montagerichtung (M) gesehen hinter dem Innengewinde und/oder Außengewinde (6) angeordnet ist.

3. Schraubverbindung (1) nach Anspruch 1 oder 2,
**dadurch gekennzeichnet, dass** die Rastkontur (28a, 28b, 36a, 36b, 36c, 36d) an einem einen Durchgangskanal (10) umfassenden hohlzylinderartigen Zwischenring (12) ausgebildet ist, wobei das Schraubteil (2) mit dem Innengewinde und/oder dem Außengewinde (6) durch den Durchgangskanal (10) hindurchführbar ist und zumindest bis zum Erreichen der Endlage des Schraubteils (2) relativ zum Zwischenring (12) zumindest in den Montagedrehsinn (M) drehbar gelagert ist und der Zwischenring (12) im und gegen den Montagedrehsinn (R) zumindest in der Endlage an dem Gegenverbinder (8) fixiert ist.

4. Schraubverbindung (1) nach Anspruch 3,
**dadurch gekennzeichnet, dass** der Zwischenring (12) zumindest einen sich in Montagerichtung (M) erstreckenden Haltearm (14) aufweist, wobei der Haltearm (14) derart ausgebildet ist, dass er in eine Haltekontur, insbesondere eine Haltenut (16), des Gegenverbinders (8) einführbar ist und in eingeführter Lage eine Verdrehung des Zwischenrings (12) im und gegen den Montagedrehsinn (R) relativ zum Gegenverbinder (8) formschlüssig blockiert.

5. Schraubverbindung (1) nach Anspruch 4,
**dadurch gekennzeichnet, dass** der Haltearm (14), zumindest eine sich in Montagerichtung M erstreckende Verstärkungsrippe (46) aufweist.

6. Schraubverbindung (1) nach einem der Ansprüche 3 bis 5,
**dadurch gekennzeichnet, dass** das Schraubteil (2) in Montagerichtung (M) betrachtet vor dem Innengewinde und/oder dem Außengewinde (6) einen radial hervorstehenden Auflageflansch (18) ausgebildet hat, wobei der Auflageflansch (18) einen maximalen Außendurchmesser aufweist, welcher größer ist als ein minimaler Durchmesser des Durchgangskanals (10) des Zwischenrings (12).

7. Schraubverbindung (1) nach Anspruch 6,
**dadurch gekennzeichnet, dass** das Rastelement (24a, 24b, 32) am Auflageflansch (18) des Schraubteils (2) angeformt ist.

8. Schraubverbindung (1) nach einem der Ansprüche 3 bis 7,
**dadurch gekennzeichnet, dass** die Rastkontur (28a, 28b, 36a, 36b, 36c, 36d) monolithisch einstückig an dem Zwischenring (12) angeformt ist.

9. Schraubverbindung (1) nach einem der Ansprüche 3 bis 8,
**dadurch gekennzeichnet, dass** der Zwischenring (12) mit einem freien Ende gegen die Montagerichtung (M) weisende Klemmarme (20) angeformt hat und die Klemmarme (20) derart ausgebildet sind, dass beim Einführen des Schraubteils (2) in den Durchgangskanal (10) die Klemmarme (20) von dem Auflageflansch (18) radialelastisch nach außen geformt werden und sich in Montagerichtung (M) gesehen vor dem Auflageflansch (18) elastisch rückformen und dadurch ein axiales Trennen des Zwischenrings (12) vom Schraubteil (2) formschlüssig blockieren.

10. Schraubverbindung (1) nach Anspruch 9,
**dadurch gekennzeichnet, dass** die Klemmarme (20) radialelastisch ausgebildet sind und die Klemmarme (20) an ihren freien Enden eine sich radial in Richtung des Durchgangskanals (10) erstreckende Ausformung (22) aufweisen, wobei die Ausformungen (22) in einem unverformten Zustand der Klemmarme (20) auf einer Kreisbahn mit einem geringeren Durchmesser als der maximale Außendurchmesser des Auflageflansches angeordnet sind.

11. Schraubverbindung (1) nach einem der Ansprüche 1 bis 10,
**dadurch gekennzeichnet, dass** das Rastelement (24a, 24b) als radial- oder axialelastischer Rastarm (24a, 24b) mit zumindest einer gegen den Montagedrehsinn (R) weisenden Rastfläche (26a, 26b) ausgebildet ist, und die Rastkontur (28a, 28b) eine korrespondierend ausgebildete Verzahnung (28a, 28b) mit über einen Kreisumfang der Rastkontur (28a, 28b) gleichmäßig verteilten Zähnen mit jeweils einer in den Montagedrehsinn (R) weisenden Haltefläche (30) aufweist.

12. Schraubverbindung (1) nach Anspruch 11,
**dadurch gekennzeichnet, dass** die Zähne der Verzahnung (28a) der Rastkontur (28a) axial gegen die Montagerichtung (M) weisend hervorstehend ausgebildet sind und der Rastarm (24a) des Schraubteils (2) axialelastisch in Montagerichtung (M) weisend hervorstehend ausgebildet ist.

13. Schraubverbindung (1) nach Anspruch 11,
**dadurch gekennzeichnet, dass** die Zähne der Verzahnung (28b) der Rastkontur (28b) radial in den Durchgangskanal (10) weisend hervorstehend ausgebildet sind und der Rastarm (24b) des Schraubteils (2) radialelastisch nach außen zum Durchgangskanal (10) weisend hervorstehend ausgebildet ist.

14. Schraubverbindung (1) nach einem der Ansprüche 1 bis 10,
**dadurch gekennzeichnet, dass** das Rastelement (32) als Verzahnung (32) mit über einen Kreisumfang des Schraubteils (2) gleichmäßig verteilten Zähnen mit jeweils einer gegen den Montagedrehsinn (R) weisenden Haltefläche (34) ausgebildet ist, und die Rastkontur (36a, 36b, 36c, 36d) zumindest einen korrespondierend ausgebildeten, axialelastischen oder radialelastischen Rastarm (36a, 36b, 36c, 36d) mit zumindest einer in den Montagedrehsinn (R) weisenden Rastfläche (38) aufweist.

15. Schraubverbindung (1) nach Anspruch 14,
**dadurch gekennzeichnet, dass** der Rastarm (36a, 36b, 36c, 36d) der Rastkontur (36a, 36b, 36c, 36d) radial in den Durchgangskanal (10) weisend hervorstehend ausgebildet ist und die Zähne der Verzahnung (32) des Rastelements (32) nach außen zum Durchgangskanal (10) weisend hervorstehend ausgebildet sind.

16. Schraubverbindung (1) nach Anspruch 14 oder 15,
**dadurch gekennzeichnet, dass** die Klemmarme (20) als die Rastkontur (36b, 36c) aufweisende Rastarme (36b, 36c) ausgebildet sind und das Rastelement (32) als Verzahnung (32) mit über einen Kreisumfang des Schraubteils (2) gleichmäßig verteilten Zähnen mit jeweils einer gegen den Montagedrehsinn (R) weisenden Haltefläche (34) ausgebildet ist, und der als Rastkontur (36b, 36c) ausgebildete Rastarm (36b, 36c) eine zahnförmige Geometrie (40) mit einem oder mehreren radial in den Durchgangskanal (10) hervorstehenden Zähnen aufweist, die jeweils mit einer Rastfläche (38) in den Montagedrehsinn (R) weist.

17. Schraubverbindung (1) nach Anspruch 16,
**dadurch gekennzeichnet, dass** die jeweilige Rastfläche (38) in Montagerichtung (M) gesehen hinter der Ausformung (22) angeordnet ist, so dass die Ausformung (22) zumindest teilweise radial die Rastfläche (38) überdeckt.

18. Schraubverbindung (1) nach Anspruch 16 oder 17,
**dadurch gekennzeichnet, dass** der Rastarm (36c) in Umfangsrichtung des Schraubteils (2) in zwei Teilarme (50, 52) getrennt ist, wobei der erste Teilarm (50) die zahnförmige Geometrie (40) mit Rastflächen (38) aufweist und der zweite Teilarm (52) die Ausformung (22) aufweist.

19. Schraubverbindung (1) nach Anspruch 14 oder 15,
**dadurch gekennzeichnet, dass** der Rastarm (36d) sich von einer Anbindungsstelle zum Zwischenring (12) aus zu einem freien Ende entgegen dem Montagedrehsinn (R) weisend erstreckt, wobei der als Rastkontur (36d) ausgebildete Rastarm (36d) an dem freien Ende eine radial in den Durchgangskanal (10) ragende zahnförmige Geometrie (41) mit einer in den Montagedrehsinn (R) weisenden Rastfläche (38) ausgebildet hat.

20. Schraubverbindung (1) nach einem der Ansprüche 16 bis 19,
**dadurch gekennzeichnet, dass** die Verzahnung (32) des Schraubteils (2) gleichmäßig verteilte Zähne aufweist und zumindest ein Teil der Zähne Schrägflächen (54) auf der in die Montagerichtung (M) weisenden Seite ausgebildet haben und/oder die Ausformung (22) und/oder die zahnförmige Geometrie (40, 41) der Rastkontur (36d) eine gegen die Montagerichtung (M) weisende Schrägfläche (56) aufweist.

21. Schraubverbindung (1) nach Anspruch 20,
**dadurch gekennzeichnet, dass** die Schrägflächen (54) der Verzahnung (32) des Schraubteils (2) in um den Umfang des Schraubteils (2) gleichmäßig verteilten Montagezonen (58) ausgebildet sind und die Montagezonen (58) in Übereinstimmung mit den als Klemmarmen (20) ausgebildeten Rastarmen (36b, 36c, 36d) bzw. in Übereinstimmung mit der zahnförmigen Geometrie (40, 41) angeordnet sind.

22. Schraubverbindung (1) nach einem der Ansprüche 3 bis 21,
**dadurch gekennzeichnet, dass** der Zwischenring (12) spritzgegossen aus einer plastifizierten polymeren Masse ist.

23. Schraubteil (2) zur Verschraubung mit einem Gegenverbinder (8) für eine Schraubverbindung (1) nach einem der Ansprüche 1 bis 22, mit einem ringförmigen Querschnitt und aufweisend einen hohlzylindrischen und aus einer plastifizierten polymeren Masse spritzgegossenen Grundkörper, wobei der Grundkörper mindestens einen Innenkanal (4) zur Anordnung und/oder Durchführung eines Leitungssystemelements und ein Innengewinde und/oder ein Außengewinde (6) zur Verschraubung mit dem Gegenverbinder (8) aufweist, wobei das Schraubteil (2) bei einer Drehung in einem Montagedrehsinn (R) in eine Montagerichtung (M) mit dem Gegenverbinder (8) verschraubbar ist, wobei in einer Endlage des Schraubteils (2) das Schraubteil (2) derart weit in Montagerichtung (M) mit dem Gegenverbinder (8) verschraubt ist, dass die Dichtigkeit ausreichend gewährleistet ist und die Anzahl der eingeschraubten Gewindegänge eine derartige Tragfähigkeit haben, dass ein Systemdruck gehalten werden kann, wobei zumindest ein Rastelement (24a, 24b, 32) monolithisch einstückig am Schraubteil (2) angeformt ist und eine Rastkontur (28a, 28b, 36a, 36b, 36c, 36d) im und gegen den Montagedrehsinn (R) sowie in Montagerichtung (M) in der Endlage des Schraubteils (2) am Gegenverbinder (8) fixiert ausgebildet ist,
**dadurch gekennzeichnet, dass**
zumindest in der Endlage eine Drehung des Schraubteils (2) gegen den Montagedrehsinn (R) durch ein formschlüssiges Eingreifen des Rastelements (24a, 24b, 32) in die Rastkontur (28a, 28b, 36a, 36b, 36c, 36d) blockiert ist.

24. Zwischenring (12) für eine Schraubverbindung (1) mit einem Schraubteil (2) und einen Gegenverbinder (8) nach einem der Ansprüche 3 bis 22, wobei der Zwischenring (12) hohlzylinderartig ausgebildet ist und zwischen dem Schraubteil (2) und dem Gegenverbinder (8) anordbar ist, und einen Durchgangskanal (10) aufweist, der derart ausgebildet ist, dass das Schraubteil (2) der Schraubverbindung (1) mit dem Innengewinde und/oder dem Außengewinde (6) durch den Durchgangskanal (10) hindurchführbar ist **dadurch gekennzeichnet, dass**
die Rastkontur (28a, 28b, 36a, 36b, 36c, 36d) der Schraubverbindung (1) an dem Zwischenring (12) derart ausgebildet ist, dass das Schraubteil (2) zumindest bis zum Erreichen der Endlage des Schraubteils (2) relativ zum Zwischenring (12) zumindest in den Montagedrehsinn (M) drehbar gelagert ist, und der Zwischenring (12) im und gegen den Montagedrehsinn (R) zumindest in der Endlage des Schraubteils (2) an dem Gegenverbinder (8) fixierbar ist und zumindest in der Endlage des Schraubteils (2) eine Drehung des Schraubteils (2) gegen den Montagedrehsinn (R) durch ein formschlüssiges Eingreifen des Rastelements (24a, 24b, 32) des Schraubteils (2) in die Rastkontur (28a, 28b, 36a, 36b, 36c, 36d) des Zwischenrings (12) blockierbar ist.

## Claims

1. Screw connection (1) having a mating connector (8) and a screw part (2) with an annular cross section, in particular a hollow screw or a nut which has a hollow-cylindrical main body which is injection-moulded from a plasticized polymer mass, wherein the main body has at least one internal duct (4) for disposing and/or feeding through a line system element, and an internal thread and/or an external thread (6) for screwing to the mating connector (8), wherein the screw part (2) when rotating in an assembling direction of rotation (R) is able to be screwed to the mating connector (8) in an assembling direction (M), wherein in a terminal position of the screw part (2) the screw part (2) is screwed to the mating connector (8) so far in the assembling direction (M) that the tightness is sufficiently guaranteed and the number of screwed-in thread turns have such a load-bearing capability that a system pressure can be maintained, wherein at least one latching element (24a, 24b, 32) is integrally moulded so as to be monolithic on the screw part (2), and a latching contour (28a, 28b, 36a, 36b, 36c, 36d) is fixedly formed in and counter to the assembling direction of rotation (R) and in the assembling direction (M) in the terminal position of the screw part (2) on the mating connector (8), **characterized in that**
at least in the terminal position a rotation of the screw part (2) counter to the assembling direction of rotation (R) is blocked as a result of the latching element (24a, 24b, 32) engaging in the latching contour (28a, 28b, 36a, 36b, 36c, 36d) in a form-fitting manner.

2. Screw connection (1) according to Claim 1,
**characterized in that** the latching element (24a, 24b, 32), when viewed counter to the assembling direction (M), is disposed behind the internal thread and/or external thread (6).

3. Screw connection (1) according to Claim 1 or 2, **characterized in that** the latching contour (28a, 28b, 36a, 36b, 36c, 36d) is formed on a hollow-cylindrical-like intermediate ring (12) which comprises a passage duct (10), wherein the screw part (2) by way of the internal thread and/or the external thread (6) is able to be guided through the passage duct (10) and is mounted so as to be rotatable relative to the intermediate ring (12) at least in the assembling direction of rotation (M) at least until the terminal position of the screw part (2) is reached, and the intermediate ring (12) is fixed in and counter to the assembling direction of rotation (R) on the mating connector (8) at least in the terminal position.

4. Screw connection (1) according to Claim 3,
**characterized in that** the intermediate ring (12) has at least one holding arm (14) which extends in the assembling direction (M), wherein the holding arm (14) is designed in such a manner that the latter is able to be introduced into a holding contour, in particular a holding groove (16), of the mating connector (8) and in the introduced position blocks in a form-fitting manner twisting of the intermediate ring (12) relative to the mating connector (8) in and counter to the assembling direction of rotation (R).

5. Screw connection (1) according to Claim 4,
**characterized in that** the holding arm (14) has at least one reinforcement rib (46) which extends in the assembling direction M.

6. Screw connection (1) according to one of Claims 3 to 5,
**characterized in that** the screw part (2), when viewed in the assembling direction (M), has formed in front of the internal thread and/or the external thread (6) a radially projecting contact flange (18), wherein the contact flange (18) has a maximum external diameter which is larger than a minimum diameter of the passage duct (10) of the intermediate ring (12).

7. Screw connection (1) according to Claim 6, **characterized in that** the latching element (24a, 24b, 32) is moulded on the contact flange (18) of the screw part (2) .

8. Screw connection (1) according to one of Claims 3 to 7,
**characterized in that** the latching contour (28a, 28b, 36a, 36b, 36c, 36d) is integrally moulded so as to be monolithic on the intermediate ring (12).

9. Screw connection (1) according to one of Claims 3 to 8,
**characterized in that** the intermediate ring (12) has moulded clamping arms (20) which by way of a free end point counter to the assembling direction (M), and the clamping arms (20) are designed in such a manner that, when the screw part (2) is being introduced into the passage duct (10), the clamping arms (20) are formed outwards in a radially elastic manner by the contact flange (18) and, when viewed in the assembling direction (M), elastically bounce back into shape in front of the contact flange (18), and as a result block in a form-fitting manner an axial separation of the intermediate ring (12) from the screw part (2).

10. Screw connection (1) according to Claim 9,
**characterized in that** the clamping arms (20) are designed to be radially elastic, and the clamping arms (20) on their free ends have a moulding (22) which extends radially in the direction of the passage duct (10), wherein the mouldings (22) in a non-deformed state of the clamping arms (20) are disposed on an orbit with a smaller diameter than the maximum external diameter of the contact flange.

11. Screw connection (1) according to one of Claims 1 to 10,
**characterized in that** the latching element (24a, 24b) is designed as a radially or axially elastic latching arm (24a, 24b) having at least one latching face (26a, 26b) that points counter to the assembling direction of rotation (R), and the latching contour (28a, 28b) has a toothing (28a, 28b) of corresponding design that has teeth which are distributed uniformly across a circular circumference of the latching contour (28a, 28b) and have in each case one holding face (30) that points in the assembling direction of rotation (R).

12. Screw connection (1) according to Claim 11,
**characterized in that** the teeth of the toothing (28a) of the latching contour (28a) are designed so as to project axially, pointing counter to the assembling direction (M), and the latching arm (24a) of the screw part (2) is designed so as to project in an axially elastic manner, pointing in the assembling direction (M).

13. Screw connection (1) according to Claim 11,
**characterized in that** the teeth of the toothing (28b) of the latching contour (28b) are designed so as to project radially, pointing into the passage duct (10), and the latching arm (24b) of the screw part (2) is designed so as to project in a radially elastic manner, pointing outwards towards the passage duct (10).

14. Screw connection (1) according to one of Claims 1 to 10,
**characterized in that** the latching element (32) is designed as a toothing (32) having teeth which are distributed uniformly across a circular circumference of the screw part (2) and have in each case one holding face (34) that points counter to the assembling direction of rotation (R), and the latching contour (36a, 36b, 36c, 36d) has at least one axially elastic or radially elastic latching arm (36a, 36b, 36c, 36d) of corresponding design which has at least one latching face (38) that points in the assembling direction of rotation (R).

15. Screw connection (1) according to Claim 14, **characterized in that** the latching arm (36a, 36b, 36c, 36d) of the latching contour (36a, 36b, 36c, 36d) is designed so as to project radially, pointing into the passage duct (10), and the teeth of the toothing (32) of the latching element (32) are designed so as to project, pointing outwards towards the passage duct (10).

16. Screw connection (1) according to Claim 14 or 15, **characterized in that** the clamping arms (20) are designed as latching arms (36b, 36c) that have the latching contour (36b, 36c), and the latching element (32) is designed as the toothing (32) having teeth which are distributed uniformly across a circular circumference of the screw part (2) and have in each case one holding face (34) that points counter to the assembling direction of rotation (R), and the latching arm (36b, 36c) that is designed as the latching contour (36b, 36c) has a tooth-shaped geometry (40) with one tooth or a plurality of teeth which project radially into the passage duct (10) and by way of a latching face (38) point in each case in the assembling direction of rotation (R).

17. Screw connection (1) according to Claim 16,
**characterized in that** the respective latching face (38), when viewed in the assembling direction (M), is disposed behind the moulding (22) in such a manner that the moulding (22) radially covers the latching face (38) at least in part.

18. Screw connection (1) according to Claim 16 or 17, **characterized in that** the latching arm (36c) in the circumferential direction of the screw part (2) is separated into two sub-arms (50, 52), wherein the first sub-arm (50) has the tooth-shaped geometry (40) with latching faces (38) and the second sub-arm (52) has the moulding (22).

19. Screw connection (1) according to Claim 14 or 15, **characterized in that** the latching arm (36d) extends from an attachment point to the intermediate ring (12) to a free end so as to point counter to the assembling direction of rotation (R), wherein the latching arm (36d) designed as a latching contour (36d) has formed on the free end a tooth-shaped geometry (41) which protrudes radially into the passage duct (10) and has a latching face (38) that points in the assembling direction of rotation (R).

20. Screw connection (1) according to one of Claims 16 to 19,
**characterized in that** the toothing (32) of the screw part (2) has uniformly distributed teeth, and at least part of the teeth have formed on the side pointing in the assembling direction (M) oblique faces (54), and/or the moulding (22) and/or the tooth-shaped geometry (40, 41) of the latching contour (36d) have/has an oblique face (56) pointing counter to the assembling direction (M).

21. Screw connection (1) according to Claim 20,
**characterized in that** the oblique faces (54) of the toothing (32) of the screw part (2) are formed in assembling zones (58) which are distributed uniformly about the circumference of the screw part (2), and the assembling zones (58) are disposed so as to coincide with the latching arms (36b, 36c, 36d) designed as clamping arms (20) or so as to coincide with the tooth-shaped geometry (40, 41).

22. Screw connection (1) according to one of Claims 3 to 21,
**characterized in that** the intermediate ring (12) is injection-moulded from a plasticized polymer mass.

23. Screw part (2) for screwing to a mating connector (8) for a screw connection (1) according to one of Claims 1 to 22, having an annular cross section and having a hollow-cylindrical main body which is injection-moulded from a plasticized polymer mass, wherein the main body has at least one internal duct (4) for disposing and/or feeding through a line system element, and an internal thread and/or an external thread (6) for screwing to the mating connector (8), wherein, in a rotation in an assembling direction of rotation (R), the screw part (2) is able to be screwed into an assembling direction (M) to the mating connector (8), wherein in a terminal position of the screw part (2) the screw part (2) is screwed to the mating connector (8) so far in the assembling direction (M) that the tightness is sufficiently guaranteed and the number of screwed-in thread turns have such a load-bearing capability that a system pressure can be maintained, wherein at least one latching element (24a, 24b, 32) is integrally moulded so as to be monolithic on the screw part (2), and a latching contour (28a, 28b, 36a, 36b, 36c, 36d) is fixedly formed in and counter to the assembling direction of rotation (R) and in the assembling direction (M) in the terminal position of the screw part (2) on the mating connector (8),
**characterized in that**
at least in the terminal position a rotation of the screw part (2) counter to the assembling direction of rotation (R) is blocked as a result of the latching element (24a, 24b, 32) engaging in the latching contour (28a, 28b, 36a, 36b, 36c, 36d) in a form-fitting manner.

24. Intermediate ring (12) for a screw connection (1) having a screw part (2) and a mating connector (8) according to one of Claims 3 to 22, wherein the intermediate ring (12) is of a hollow-cylindrical-like design and able to be disposed between the screw part (2) and the mating connector (8), and has a passage duct (10) which is designed in such a manner that the screw part (2) of the screw connection (1) by way of the internal thread and/or the external thread (6) is able to be guided through the passage duct (10),
**characterized in that**
the latching contour (28a, 28b, 36a, 36b, 36c, 36d) of the screw connection (1) is formed on the intermediate ring (12) in such a manner that the screw part (2) is mounted so as to be rotatable relative to the intermediate ring (12) at least in the assembling direction of rotation (M) at least until the terminal position of the screw part (2) is reached, and the intermediate ring (12) is able to be fixed in and counter to the assembling direction of rotation (R) on the mating connector (8) at least in the terminal position of the screw part (2), and at least in the terminal position of the screw part (2) a rotation of the screw part (2) counter to the assembling direction of rotation (R) is able to be blocked as a result of the latching element (24a, 24b, 32) of the screw part (2) engaging in the latching contour (28a, 28b, 36a, 36b, 36c, 36d) of the intermediate ring (12) in a form-fitting manner.

## Revendications

1. Liaison vissée (1) présentant un contre-connecteur (8) et une partie vis (2) avec une section transversale annulaire, notamment une vis creuse ou un écrou, qui présente un corps de base cylindrique creux et moulé par injection à partir d'une masse polymère plastifiée, le corps de base présentant au moins un canal intérieur (4) pour l'agencement et/ou le passage d'un élément de système de conduite et un filetage intérieur et/ou un filetage extérieur (6) pour le vissage avec le contre-connecteur (8), la partie vis (2) pouvant être vissée avec le contre-connecteur (8) lors d'une rotation dans un sens de rotation de montage (R) dans une direction de montage (M) ; dans une position finale de la partie vis (2), la partie vis (2) étant vissée dans la direction de montage (M) avec le contre-connecteur (8) dans une mesure telle que l'étanchéité est suffisamment garantie et le nombre de filets vissés a une capacité de charge telle qu'une pression du système peut être maintenue, au moins un élément d'encliquetage (24a, 24b, 32) étant formé de manière monolithique d'une seule pièce sur la partie vis (2) et un contour d'encliquetage (28a, 28b, 36a, 36b, 36c, 36d) étant réalisé dans le sens de rotation de montage (R) et à l'encontre de celui-ci ainsi que dans la direction de montage (M) dans la position finale de la partie vis (2) fixée sur le contre-connecteur (8), **caractérisée en ce**
**qu'**au moins dans la position finale, une rotation de la partie vis (2) à l'encontre du sens de rotation de montage (R) est bloquée par un engagement par complémentarité de forme de l'élément d'encliquetage (24a, 24b, 32) dans le contour d'encliquetage (28a, 28b, 36a, 36b, 36c, 36d).

2. Liaison vissée (1) selon la revendication 1, **caractérisée en ce que** l'élément d'encliquetage (24a, 24b, 32) est agencé derrière le filetage intérieur et/ou le filetage extérieur (6), vu à l'encontre de la direction de montage (M).

3. Liaison vissée (1) selon la revendication 1 ou 2, **caractérisée en ce que** le contour d'encliquetage (28a, 28b, 36a, 36b, 36c, 36d) est réalisé sur une bague intermédiaire (12) de type cylindre creux comprenant un canal de passage (10), la partie vis (2) pouvant être guidée avec le filetage intérieur et/ou le filetage extérieur (6) à travers le canal de passage (10) et étant montée de manière rotative par rapport à la bague intermédiaire (12) au moins dans le sens de rotation de montage (M) au moins jusqu'à ce que la position finale de la partie vis (2) soit atteinte et la bague intermédiaire (12) étant fixée dans le sens de rotation de montage (R) et à l'encontre de celui-ci au moins dans la position finale sur le contre-connecteur (8).

4. Liaison vissée (1) selon la revendication 3, **caractérisée en ce que** la bague intermédiaire (12) présente au moins un bras de retenue (14) s'étendant dans la direction de montage (M), le bras de retenue (14) étant réalisé de telle sorte qu'il peut être introduit dans un contour de retenue, notamment une rainure de retenue (16), du contre-connecteur (8) et, en position introduite, il bloque par complémentarité de forme une rotation de la bague intermédiaire (12) dans le sens de rotation de montage (R) et à l'encontre de celui-ci par rapport au contre-connecteur (8).

5. Liaison vissée (1) selon la revendication 4, **caractérisée en ce que** le bras de retenue (14) présente au moins une nervure de renforcement (46) s'étendant dans la direction de montage M.

6. Liaison vissée (1) selon l'une quelconque des revendications 3 à 5, **caractérisée en ce que** la partie vis (2), vue dans la direction de montage (M), a une bride d'appui (18) faisant saillie radialement réalisée avant le filetage intérieur et/ou le filetage extérieur (6), la bride d'appui (18) présentant un diamètre extérieur maximal supérieur à un diamètre minimal du canal de passage (10) de la bague intermédiaire (12).

7. Liaison vissée (1) selon la revendication 6, **caractérisée en ce que** l'élément d'encliquetage (24a, 24b, 32) est formé sur la bride d'appui (18) de la partie vis (2).

8. Liaison vissée (1) selon l'une quelconque des revendications 3 à 7, **caractérisée en ce que** le contour d'encliquetage (28a, 28b, 36a, 36b, 36c, 36d) est formé de manière monolithique d'une seule pièce sur la bague intermédiaire (12).

9. Liaison vissée (1) selon l'une quelconque des revendications 3 à 8, **caractérisée en ce que** la bague intermédiaire (12) a des bras de serrage (20) formés en étant orientés avec une extrémité libre à l'encontre de la direction de montage (M) et les bras de serrage (20) sont réalisés de telle sorte que lors de l'introduction de la partie vis (2) dans le canal de passage (10), les bras de serrage (20) sont formés de manière radialement élastique vers l'extérieur par la bride d'appui (18) et se reforment de manière élastique devant la bride d'appui (18), vus dans la direction de montage (M), et bloquent ainsi par complémentarité de forme une séparation axiale de la bague intermédiaire (12) de la partie vis (2).

10. Liaison vissée (1) selon la revendication 9, **caractérisée en ce que** les bras de serrage (20) sont réalisés sous forme radialement élastique et les bras de serrage (20) présentent à leurs extrémités libres une formation (22) s'étendant radialement en direction du canal de passage (10), les formations (22) étant agencées, dans un état non déformé des bras de serrage (20), sur une trajectoire circulaire d'un diamètre inférieur au diamètre extérieur maximal de la bride d'appui.

11. Liaison vissée (1) selon l'une quelconque des revendications 1 à 10, **caractérisée en ce que** l'élément d'encliquetage (24a, 24b) est réalisé sous forme de bras d'encliquetage (24a, 24b) radialement ou axialement élastique avec au moins une surface d'encliquetage (26a, 26b) orientée à l'encontre du sens de rotation de montage (R), et le contour d'encliquetage (28a, 28b) présente une denture (28a, 28b) réalisée de manière correspondante avec des dents réparties uniformément sur une circonférence circulaire du contour d'encliquetage (28a, 28b) avec respectivement une surface de retenue (30) orientée dans le sens de rotation de montage (R).

12. Liaison vissée (1) selon la revendication 11, **caractérisée en ce que** les dents de la denture (28a) du contour d'encliquetage (28a) sont réalisées en faisant saillie orientées axialement à l'encontre de la direction de montage (M) et le bras d'encliquetage (24a) de la partie vis (2) est réalisé en faisant saillie orienté de manière axialement élastique dans la direction de montage (M) .

13. Liaison vissée (1) selon la revendication 11, **caractérisée en ce que** les dents de la denture (28b) du contour d'encliquetage (28b) sont réalisées en faisant saillie orientées radialement dans le canal de passage (10) et le bras d'encliquetage (24b) de la partie vis (2) est réalisé en faisant saillie orienté de manière radialement élastique vers l'extérieur vers le canal de passage (10).

14. Liaison vissée (1) selon l'une quelconque des revendications 1 à 10, **caractérisée en ce que** l'élément d'encliquetage (32) est réalisé sous forme de denture (32) avec des dents réparties uniformément sur une circonférence circulaire de la partie vis (2), avec respectivement une surface de retenue (34) orientée à l'encontre du sens de rotation de montage (R), et le contour d'encliquetage (36a, 36b, 36c, 36d) présente au moins un bras d'encliquetage (36a, 36b, 36c, 36d) axialement élastique ou radialement élastique, réalisé de manière correspondante, avec au moins une surface d'encliquetage (38) orientée dans le sens de rotation de montage (R).

15. Liaison vissée (1) selon la revendication 14, **caractérisée en ce que** le bras d'encliquetage (36a, 36b, 36c, 36d) du contour d'encliquetage (36a, 36b, 36c, 36d) est réalisé en faisant saillie orienté radialement dans le canal de passage (10) et les dents de la denture (32) de l'élément d'encliquetage (32) sont réalisées en faisant saillie orientées vers l'extérieur vers le canal de passage (10).

16. Liaison vissée (1) selon la revendication 14 ou 15, **caractérisée en ce que** les bras de serrage (20) sont réalisés sous forme de bras d'encliquetage (36b, 36c) présentant le contour d'encliquetage (36b, 36c) et l'élément d'encliquetage (32) est réalisé sous forme de denture (32) avec des dents réparties uniformément sur une circonférence circulaire de la partie vis (2) avec respectivement une surface de retenue (34) orientée à l'encontre du sens de rotation de montage (R), et le bras d'encliquetage (36b, 36c) réalisé sous forme de contour d'encliquetage (36b, 36c) présente une géométrie en forme de dent (40) avec une ou plusieurs dents faisant saillie radialement dans le canal de passage (10), dont chacune est orientée avec une surface d'encliquetage (38) dans le sens de rotation de montage (R).

17. Liaison vissée (1) selon la revendication 16, **caractérisée en ce que** la surface d'encliquetage (38) respective, vue dans la direction de montage (M), est agencée derrière la formation (22), de telle sorte que la formation (22) recouvre au moins partiellement radialement la surface d'encliquetage (38).

18. Liaison vissée (1) selon la revendication 16 ou 17, **caractérisée en ce que** le bras d'encliquetage (36c) est séparé en deux bras partiels (50, 52) dans la direction circonférentielle de la partie vis (2), le premier bras partiel (50) présentant la géométrie en forme de dent (40) avec des surfaces d'encliquetage (38) et le deuxième bras partiel (52) présentant la formation (22).

19. Liaison vissée (1) selon la revendication 14 ou 15, **caractérisée en ce que** le bras d'encliquetage (36d) s'étend à partir d'un point d'attache à la bague intermédiaire (12) vers une extrémité libre en étant orienté à l'encontre du sens de rotation de montage (R), le bras d'encliquetage (36d) réalisé sous forme de contour d'encliquetage (36d) ayant, réalisée à l'extrémité libre, une géométrie en forme de dent (41) dépassant radialement dans le canal de passage (10) avec une surface d'encliquetage (38) orientée dans le sens de rotation de montage (R).

20. Liaison vissée (1) selon l'une quelconque des revendications 16 à 19, **caractérisée en ce que** la denture (32) de la partie vis (2) présente des dents réparties uniformément et au moins une partie des dents ont des surfaces obliques (54) réalisées sur le côté orienté dans la direction de montage (M) et/ou la formation (22) et/ou la géométrie en forme de dent (40, 41) du contour d'encliquetage (36d) présente une surface oblique (56) orientée à l'encontre de la direction de montage (M).

21. Liaison vissée (1) selon la revendication 20, **caractérisée en ce que** les surfaces obliques (54) de la denture (32) de la partie vis (2) sont réalisées dans des zones de montage (58) réparties uniformément autour de la circonférence de la partie vis (2) et les zones de montage (58) sont agencées en coïncidence avec les bras d'encliquetage (36b, 36c, 36d) réalisés sous forme de bras de serrage (20) ou en coïncidence avec la géométrie en forme de dent (40, 41).

22. Liaison vissée (1) selon l'une quelconque des revendications 3 à 21, **caractérisée en ce que** la bague intermédiaire (12) est moulée par injection à partir d'une masse polymère plastifiée.

23. Partie vis (2) destinée à être vissée avec un contre-connecteur (8) pour une liaison vissée (1) selon l'une quelconque des revendications 1 à 22, avec une section transversale annulaire et présentant un corps de base cylindrique creux et moulé par injection à partir d'une masse polymère plastifiée, le corps de base présentant au moins un canal intérieur (4) pour l'agencement et/ou le passage d'un élément de système de conduite et un filetage intérieur et/ou un filetage extérieur (6) pour le vissage avec le contre-connecteur (8), la partie vis (2) pouvant être vissée avec le contre-connecteur (8) lors d'une rotation dans un sens de rotation de montage (R) dans une direction de montage (M) ; dans une position finale de la partie vis (2), la partie vis (2) étant vissée dans la direction de montage (M) avec le contre-connecteur (8) dans une mesure telle que l'étanchéité est suffisamment garantie et le nombre de filets vissés a une capacité de charge telle qu'une pression du système peut être maintenue, au moins un élément d'encliquetage (24a, 24b, 32) étant formé de manière monolithique d'une seule pièce sur la partie vis (2) et un contour d'encliquetage (28a, 28b, 36a, 36b, 36c, 36d) étant réalisé dans le sens de rotation de montage (R) et à l'encontre de celui-ci ainsi que dans la direction de montage (M) dans la position finale de la partie vis (2) sur le contre-connecteur (8),
**caractérisée en ce**
**qu'**au moins dans la position finale, une rotation de la partie vis (2) à l'encontre du sens de rotation de montage (R) est bloquée par un engagement par complémentarité de forme de l'élément d'encliquetage (24a, 24b, 32) dans le contour d'encliquetage (28a, 28b, 36a, 36b, 36c, 36d).

24. Bague intermédiaire (12) pour une liaison vissée (1) avec une partie vis (2) et un contre-connecteur (8) selon l'une quelconque des revendications 3 à 22, la bague intermédiaire (12) étant réalisée en forme de cylindre creux et pouvant être agencée entre la partie vis (2) et le contre-connecteur (8), et présentant un canal de passage (10) qui est réalisé de telle sorte que la partie vis (2) de la liaison vissée (1) peut être guidée avec le filetage intérieur et/ou le filetage extérieur (6) à travers le canal de passage (10),
**caractérisée en ce que**
le contour d'encliquetage (28a, 28b, 36a, 36b, 36c, 36d) de la liaison vissée (1) est réalisé sur la bague intermédiaire (12) de telle sorte que la partie vis (2) est montée de manière rotative par rapport à la bague intermédiaire (12) au moins dans le sens de rotation de montage (M) au moins jusqu'à ce que la position finale de la partie vis (2) soit atteinte, et la bague intermédiaire (12) peut être fixée sur le contre-connecteur (8) dans le sens de rotation de montage (R) et à l'encontre de celui-ci au moins dans la position finale de la partie vis (2), et, au moins dans la position finale de la partie vis (2), une rotation de la partie vis (2) à l'encontre du sens de rotation de montage (R) peut être bloquée par un engagement par complémentarité de forme de l'élément d'encliquetage (24a, 24b, 32) de la partie vis (2) dans le contour d'encliquetage (28a, 28b, 36a, 36b, 36c, 36d) de la bague intermédiaire (12).
